# FASCICULE DE BREVET EUROPEEN

(11) **EP 4 164 898 B1**
(45) Date de publication et mention de la délivrance du brevet: **26.02.2025**
(21) Numéro de dépôt: 21732392.2
(22) Date de dépôt: 22.04.2021
(51) Int. Cl.: B60C 11/04, B60C 9/00, B60C 9/20, B60C 11/01, B60C 11/03, B60C 11/13

(54) **PNEUMATIQUE ÉMETTANT UN BRUIT RÉDUIT**
GERÄUSCHARMER REIFEN
LOW-NOISE TYRE

(30) Priorité: 11.06.2020 FR 2006097
(43) Date de publication de la demande: 19.04.2023
(73) Titulaire: COMPAGNIE GENERALE DES ETABLISSEMENTS MICHELIN, 63000 Clermont-Ferrand (FR)
(72) Inventeur: DELBAST, Arnaud, 63040 CLERMONT-FERRAND Cedex 9 (FR); GUIMARD, Bruno, 63040 CLERMONT-FERRAND Cedex 9 (FR); BOURGEOIS, Frédéric, 63040 CLERMONT-FERRAND Cedex 9 (FR)
(74) Mandataire: M.F.P. Michelin
(86) Numéro de dépôt international: PCT/FR2021/050697
(87) Numéro de publication internationale: WO 2021/250331

(56) Documents cités:
- EP-A1- 3 305 557
- EP-A1- 3 348 422
- EP-A1- 3 450 209
- WO-A1-2013/150143
- DE-T5- 112014 000 628
- FR-A1- 3 044 596

## Description

La présente invention concerne un pneumatique pour véhicule de tourisme. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de l'état de la technique un pneumatique de dimensions 245/45R18 commercialisé sous la marque MICHELIN et appartenant à la gamme PRIMACY 4. Un tel pneumatique présente un excellent compromis de performances, notamment entre l'adhérence sur sol sec ou sur sol mouillé et le bruit extérieur généré par le pneumatique.

Or, les nouveaux règlements relatifs au bruit extérieur généré par le pneumatique, notamment en Europe, requièrent une diminution de ce bruit extérieur.

Les manufacturiers de pneumatiques ont donc développés des pneumatiques afin de réduire ce bruit extérieur comme par exemple en modifiant la sculpture du pneumatique comme cela est divulgué dans WO2018/199273 dans lequel les rainures sont pourvues de protubérances permettant de décaler la fréquence de résonance de la colonne d'air de ces rainures en dehors du domaine fréquentiel audible pour l'oreille humaine. Néanmoins, pourvoir les rainures de ces protubérances rend complexe la fabrication des moules correspondant et donc le coût des pneumatiques associés.

Une autre solution désormais bien connue a été divulguée dans WO2010/069510 et consiste à modifier l'architecture du pneumatique en intercalant radialement entre la couche de roulement du pneumatique et l'armature de sommet du pneumatique une sous-couche d'un matériau comprenant une charge de haute densité. Cette sous-couche permet non pas de décaler la fréquence du bruit émis comme dans WO2018/199273 mais d'atténuer la puissance acoustique de ce bruit. Néanmoins, pourvoir le pneumatique d'une telle sous-couche augmente, en plus du coût du pneumatique, la masse du pneumatique et par conséquent sa résistance au roulement.

L'invention a pour but de réduire le bruit extérieur généré par le pneumatique de façon simple et sans coût supplémentaire par rapport au pneumatique de l'état de la technique.

A cet effet, l'invention a pour objet un pneumatique pour véhicule de tourisme présentant un diamètre extérieur OD et comprenant une bande de roulement destinée à entrer en contact avec le sol lors d'un roulage du pneumatique par l'intermédiaire d'une surface de roulement délimitée axialement par des premier et deuxième bords axiaux de la surface de roulement, la bande de roulement comprenant :
- une portion axialement centrale comprenant des rainures circonférentielles principales présentant une profondeur supérieure ou égale à 50% de la hauteur de sculpture comprenant au moins des première et deuxième rainures circonférentielles principales agencées axialement de part et d'autre du plan médian du pneumatique, les première et deuxième rainures circonférentielles principales étant les rainures circonférentielles principales axialement les plus extérieures de la bande de roulement, la portion axialement centrale s'étendant axialement depuis un bord axialement extérieur de la première rainure circonférentielle principale jusqu'à un bord axialement extérieur de la deuxième rainure circonférentielle principale, la portion axialement centrale comprenant au moins une nervure centrale, la ou chaque nervure centrale étant délimitée axialement par deux rainures circonférentielles principales présentant une profondeur supérieure ou égale à 50% de la hauteur de sculpture,
- des première et deuxième portions axialement latérales agencées axialement à l'extérieur de la portion axialement centrale de part et d'autre axialement de la portion axialement centrale par rapport au plan médian du pneumatique et agencées de sorte que :
   - la première portion axialement latérale s'étend axialement depuis le premier bord axial de la surface de roulement jusqu'au bord axialement extérieur de la première rainure circonférentielle principale,
   - la deuxième portion axialement latérale s'étend axialement depuis le deuxième bord axial de la surface de roulement jusqu'au bord axialement extérieur de la deuxième rainure circonférentielle principale,
      la ou chaque nervure centrale et chaque première et deuxième portion axialement latérale comprend au moins une portion axiale satisfaisant une seule des conditions I, II, III suivantes, la largeur axiale de l'ensemble de la ou des portions axiales de la ou chaque nervure centrale et de chaque première et deuxième portion axialement latérale satisfaisant chacune une seule des conditions I, II, III étant supérieure ou égale à 70% de la largeur axiale de la ou chaque nervure centrale et de chaque première et deuxième portion axialement latérale:
      I - la portion axiale ne comprend aucune découpure transversale présentant une profondeur supérieure ou égale à 20% de la hauteur de sculpture et une longueur axiale supérieure ou égale à 20% de la largeur axiale de la nervure centrale ou de la portion axialement latérale, la portion axiale comprenant éventuellement au moins une découpure circonférentielle présentant une profondeur strictement inférieure à 50% de la hauteur de sculpture,
      Il - la portion axiale comprend des découpures transversales présentant une profondeur supérieure ou égale à 20% de la hauteur de sculpture et une longueur axiale supérieure ou égale à 20% de la largeur axiale de la nervure centrale ou de la portion axialement latérale, l'ensemble des N découpures transversales de la portion axiale présentant une profondeur supérieure ou égale à 20% de la hauteur de sculpture et une longueur axiale supérieure ou égale à 20% de la largeur axiale de la nervure centrale ou de la portion axialement latérale étant agencé de sorte que π x OD / N ≥ 40 mm, la portion axiale comprenant éventuellement au moins une découpure circonférentielle présentant une profondeur strictement inférieure à 50% de la hauteur de sculpture,
      III - la portion axiale comprend des découpures transversales présentant une profondeur supérieure ou égale à 20% de la hauteur de sculpture et une longueur axiale supérieure ou égale à 20% de la largeur axiale de la nervure centrale ou de la portion axialement latérale, l'ensemble des N découpures transversales de la nervure centrale ou de la portion axiale présentant une profondeur supérieure ou égale à 20% de la hauteur de sculpture et une longueur axiale supérieure ou égale à 20% de la largeur axiale de la nervure centrale ou de la portion axialement latérale étant agencé de sorte que π x OD / N ≤ 24 mm, la portion axiale comprenant éventuellement au moins une découpure circonférentielle présentant une profondeur strictement inférieure à 50% de la hauteur de sculpture,

la condition I ou II étant satisfaite au moins par une des portions axiales de la ou d'une des nervures centrales ou par une des portions axiales de la première portion axialement latérale ou par une des portions axiales de la deuxième portion axialement latérale,
la condition III étant satisfaite au moins par une des portions axiales de la ou d'une des nervures centrales ou par une des portions axiales de la première portion axialement latérale ou par une des portions axiales de la deuxième portion axialement latérale.

Grâce à une ou plusieurs nervures centrales et des portions axialement latérales comprenant soit pas ou peu de découpures transversales, soit un nombre important de découpures transversales, les inventeurs à l'origine de l'invention ont réduit le bruit extérieur généré par le pneumatique.

En effet, les inventeurs à l'origine de l'invention ont utilisé le fait que le bruit extérieur généré par le pneumatique provenait d'une part de l'excitation des découpures et d'autre part de la résonance de la structure mécanique formée par le pneumatique. Les inventeurs ont découvert qu'en évitant de superposer le spectre fréquentiel du bruit issu l'excitation des découpures et le spectre fréquentiel du bruit issu de la structure mécanique, on évitait de faire résonner les fréquences et les harmoniques de ces spectres fréquentiels et donc que l'on pouvait faire baisser significativement le bruit extérieur émis par le pneumatique.

Plus précisément, le spectre fréquentiel du bruit issu de la structure mécanique est compris entre 600 Hz et 1100 Hz, ce spectre étant notamment fonction de la longueur de l'aire de contact du pneumatique, de ses dimensions et de sa structure. Conformément à l'invention, il convient que le spectre fréquentiel du bruit issu l'excitation des découpures transversales de la ou de chaque nervure centrale et de chaque première et deuxième portion axialement latérale soit décalé par rapport au spectre fréquentiel allant de 600 Hz à 1100 Hz pour que le bruit extérieur émis par le pneumatique soit réduit. Ainsi, pour chaque portion axiale de chaque nervure centrale et de chaque première et deuxième portion axialement latérale, on peut augmenter le nombre de découpures dans l'aire de contact du pneumatique (c'est-à-dire réduire le pas moyen π x OD/ N) de façon à décaler vers les hautes fréquences le spectre fréquentiel du bruit issu l'excitation des découpures transversales. Inversement, pour chaque portion axiale de chaque nervure centrale et de chaque première et deuxième portion axialement latérale, on peut également diminuer le nombre de découpures dans l'aire de contact du pneumatique (c'est-à-dire augmenter le pas moyen π x OD/ N) de façon à décaler vers les basses fréquences le spectre fréquentiel du bruit issu l'excitation des découpures transversales. L'excitation dépend également de la vitesse du véhicule, on peut choisir chaque valeur de N dans les intervalles de l'invention en fonction de la vitesse d'utilisation du véhicule.

Conformément à l'invention, la condition I ou II et la condition III sont satisfaites au moins une fois par au moins une des portions axiales de la ou d'une des nervures centrales et par au moins une des portions axiales de la première et la deuxième portion axialement latérale. En effet, si uniquement la condition I ou II est satisfaite par la nervure ou toutes les nervures et chaque première et la deuxième portion axialement centrale, le pneumatique présenterait une adhérence sur sol mouillé dégradée. Si uniquement la condition III était satisfaite par la nervure ou toutes les nervures et chaque première et la deuxième portion axialement centrale, on réduirait alors de façon trop importante la rigidité de la bande de roulement dans le sens longitudinal du fait d'un nombre de découpures transversales trop élevé ce qui engendrerait une baisse de l'adhérence sur sol sec.

Dans le cadre de l'invention, chaque portion axiale satisfait soit une unique condition parmi les conditions I, II, III soit ne satisfait pas l'une des conditions I, II, III. Ainsi, si lorsqu'on se déplace axialement sur une nervure centrale ou une portion axialement latérale, on passe d'un plan perpendiculaire à l'axe de rotation sur lequel une des conditions I, II, III est satisfaite à un plan perpendiculaire à l'axe de rotation sur lequel aucune condition I, II, III n'est satisfaite, c'est que l'on passe d'une portion axiale à une autre portion axiale. De façon analogue, si lorsqu'on se déplace axialement sur une nervure centrale ou une portion axialement latérale, on passe d'un plan perpendiculaire à l'axe de rotation sur lequel une des conditions I, II, III est satisfaite à un plan perpendiculaire à l'axe de rotation sur lequel une autre des conditions I, II, III est satisfaite, c'est que l'on passe d'une portion axiale à une autre portion axiale. Enfin, si lorsqu'on se déplace axialement sur une nervure centrale ou une portion axialement latérale, on passe d'un plan perpendiculaire à l'axe de rotation sur lequel une des conditions I, II, III est satisfaite à un plan perpendiculaire à l'axe de rotation sur lequel la même condition I, II, III est satisfaite, c'est que l'on est toujours sur la même portion axiale.

Le fait que les découpures transversales à prendre en compte pour le calcul du pas moyen présentent à la fois une profondeur supérieure ou égale à 20% de la hauteur de sculpture et une longueur axiale supérieure ou égale à 20% de la largeur axiale de la nervure centrale ou de la portion axialement latérale considérée permet de ne pas prendre en compte les découpures transversales qui ne sont pas assez profondes ou pas assez longues axialement pour contribuer au bruit extérieur émis par le pneumatique.

Le fait que la largeur axiale de l'ensemble de la ou des portions axiales de la ou chaque nervure centrale et de chaque première et deuxième portion axialement latérale satisfaisant une seule des conditions I, II, III est supérieure ou égale à 70% de la largeur axiale de la ou chaque nervure centrale et de chaque première et deuxième portion axialement latérale permet d'envisager des modes de réalisation dans lesquels au moins une portion non significative, ici représentant moins de 30% de la largeur axiale de la ou chaque nervure centrale et de chaque première et deuxième portion axialement latérale ne satisfait aucune des conditions I, II et III. Le fait que la largeur axiale de cette ou ces portions ne satisfaisant aucune des conditions I, II et III soit relativement réduite permet de s'assurer que cette ou ces portions ne participent pas ou peu à l'émission du bruit extérieur émis par le pneumatique susceptible de venir en résonance avec le bruit de structure du pneumatique.

Par ailleurs, le fait que la ou chaque nervure centrale et chaque première et deuxième portion axialement latérale comprend au moins une portion axiale satisfaisant une seule des conditions I, II, III permet d'envisager des modes de réalisation dans lesquels différentes conditions I, II, III sont satisfaites ou non par différentes portions axiales distinctes de la ou chaque nervure centrale et de chaque première et deuxième portion axialement latérale. Conformément à l'invention, la somme des largeurs axiales de la ou des portions axiales satisfaisant chacune une seule des conditions I, II, III est supérieure ou égale à 70% de la largeur axiale de la ou chaque nervure centrale et de chaque première et deuxième portion axialement latérale.

Dans le cas d'une portion axiale d'une nervure ou d'une portion axialement latérale ne satisfaisant pas la même condition I, II, III que les deux portions axiales adjacentes de la même nervure ou de la même portion axialement latérale ou dans le cas d'une d'une portion axiale d'une nervure ou d'une portion axialement latérale ne satisfaisant aucune des conditions I, II et III alors que les deux portions axiales adjacentes de la même nervure ou de la même portion axialement latérale satisfont chacune une seule des conditions I, II, III, il existe deux zones de transition situées entre la portion axiale considérée et chaque portion axiale adjacente, ces deux zones de transition émettant un bruit extérieur dans un spectre fréquentiel susceptible de venir se superposer au spectre du bruit de la structure du pneumatique. Donc, on minimisera, voire on supprimera, le nombre de zones de transition. Ainsi, on minimisera d'une part, le nombre de conditions I, II, III satisfaites sur une même nervure centrale ou une même portion axialement latérale et d'autre part, si une seule des conditions I, II, III est satisfaite sur une même nervure ou une même portion axialement latérale, on minimisera, voire on supprimera les portions axiales ne satisfaisant aucune des conditions I, II et III et venant s'intercaler axialement entre les différentes portions axiales satisfaisant l'unique condition I, Il et III.

OD est le diamètre extérieur du pneumatique mesuré sur le plan médian du pneumatique. π x OD est donc la circonférence du pneumatique mesurée sur le plan médian du pneumatique. Les mesures de N et de OD ou de π x OD se font sur un pneumatique non chargé et peuvent être indifféremment réalisées sur un pneumatique gonflé ou non, l'important étant de réaliser les mesures de N et de OD ou π x OD dans les mêmes conditions.

La largeur axiale d'une nervure centrale, d'une portion axialement centrale ou latérale, d'une portion axiale d'une nervure centrale, d'une portion axiale d'une portion axialement latérale est la distance selon la direction axiale entre deux plans perpendiculaires à l'axe de rotation du pneumatique passant chacun par un bord axialement intérieur et axialement extérieur de la nervure centrale, de la portion axialement centrale ou latérale, de la portion axiale de la nervure centrale, de la portion axiale de la portion axialement latérale.

La longueur axiale d'une découpure transversale est la distance selon la direction axiale entre deux plans perpendiculaires à l'axe de rotation du pneumatique passant chacun par une extrémité axialement intérieure et axialement extérieure de la découpure transversale.

Conformément à l'invention, au moins une portion de la ou d'une des nervures centrales ou au moins une portion de la première portion axialement latérale ou au moins une portion de la deuxième portion axialement latérale comprend des découpures transversales. Une découpure désigne soit une rainure, soit une incision et forme un espace débouchant sur la surface de roulement.

Une incision ou une rainure présente, sur la surface de roulement, deux dimensions principales caractéristiques : une largeur et une longueur curviligne telles que la longueur curviligne est au moins égale à deux fois la largeur. Une incision ou une rainure est donc délimitée par au moins deux faces latérales principales déterminant sa longueur curviligne et reliées par une face de fond, les deux faces latérales principales étant distantes l'une de l'autre d'une distance non nulle, dite largeur de la découpure.

La largeur de la découpure est, sur un pneumatique neuf, la distance maximale entre les deux faces latérales principales mesurée, dans le cas où la découpure ne comprend pas de chanfrein, à une cote radiale confondue avec la surface de roulement, et dans le cas où la découpure comprend un chanfrein, à la cote radiale la plus radialement extérieure de la découpure et radialement intérieure au chanfrein. Dans le cas où la découpure présente deux portions distinctes de largeurs différentes W1 et W2 telles que 0,67≤W1/W2≤1,50, la largeur de la découpure est la largeur de la portion présentant la longueur curviligne la plus grande. Des portions distinctes sont séparées l'une de l'autre par une discontinuité dans la courbure de chaque face latérale de chaque portion, comme par exemple un épaulement localisé ou brusque ou un rétrécissement localisé ou brusque.

La profondeur de la découpure est, sur un pneumatique neuf, la distance radiale maximale entre le fond de la découpure et son projeté sur le sol lors du roulage du pneumatique. La valeur maximale des profondeurs des découpures est nommée hauteur de sculpture.

Une incision est telle que la distance entre les faces latérales principales est appropriée pour permettre la mise en contact au moins partielle des faces latérales principales délimitant ladite incision lors du passage dans l'aire de contact, notamment lorsque le pneumatique est à l'état neuf et dans des conditions usuelles de roulage, comprenant notamment le fait que le pneumatique soit à charge nominale et à pression nominale.

Une rainure est telle que la distance entre les faces latérales principales est telle que ces faces latérales principales ne peuvent venir en contact l'une contre l'autre dans des conditions usuelles de roulage, comprenant notamment le fait que le pneumatique soit à charge nominale et à pression nominale.

Une découpure peut être transversale ou circonférentielle.

Une découpure transversale est telle que la découpure s'étend selon une direction moyenne formant un angle strictement supérieur à 30°, de préférence supérieur ou égal à 45° avec la direction circonférentielle du pneumatique. La direction moyenne est la courbe la plus courte joignant les deux extrémités de la découpure et parallèle à la surface de roulement. Une découpure transversale peut être continue, c'est-à-dire ne pas être interrompue par un bloc de sculpture ou une autre découpure de sorte que les deux faces latérales principales déterminant sa longueur sont ininterrompues sur la longueur de la découpure transversale. Une découpure transversale peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures.

Une découpure circonférentielle est telle que la découpure s'étend selon une direction moyenne formant un angle inférieur ou égal à 30°, de préférence inférieur ou égal à 10° avec la direction circonférentielle du pneumatique. La direction moyenne est la courbe la plus courte joignant les deux extrémités de la découpure et parallèle à la surface de roulement. Dans le cas d'une découpure circonférentielle continue, les deux extrémités sont confondues l'une avec l'autre et sont jointes par une courbe faisant un tour complet du pneumatique. Une découpure circonférentielle peut être continue, c'est-à-dire ne pas être interrompue par un bloc de sculpture ou une autre découpure de sorte que les deux faces latérales principales déterminant sa longueur sont ininterrompues sur l'ensemble d'un tour du pneumatique. Une découpure circonférentielle peut également être discontinue, c'est-à-dire interrompue par un ou plusieurs blocs de sculpture et/ou une ou plusieurs découpures de sorte que les deux faces latérales principales déterminant sa longueur sont interrompues par un ou plusieurs blocs de sculpture et/ou une ou plusieurs découpures sur l'ensemble d'un tour du pneumatique.

La direction principale d'une découpure est la direction selon laquelle passe la courbe équidistante de chacun des bords de la découpure à la cote radiale de la surface de roulement. La longueur curviligne est la longueur mesurée selon cette courbe équidistante de chacun des bords de la découpure à la cote radiale de la surface de roulement, et ce entre chaque extrémité de la découpure.

Dans le cas d'une découpure circonférentielle située hors du plan médian du pneumatique, les faces latérales sont appelées faces axialement intérieure et face axialement extérieure, la face axialement intérieure étant agencée, à un azimut donné, axialement à l'intérieur de la face axialement extérieure par rapport au plan médian.

Dans le cas d'une découpure transversale, les faces latérales sont appelées face d'attaque et face de fuite, la face d'attaque étant celle dont le bord, pour une ligne circonférentielle donnée, entre dans l'aire de contact avant le bord de la face de fuite.

Les rainures circonférentielles présentant une profondeur supérieure ou égale à 50% de la hauteur de sculpture et entre lesquelles sont comprises les premières et deuxième portions axialement latérales et la ou les nervures centrales sont dites principales. Ainsi, dans les cas où la hauteur de sculpture est au moins deux fois plus grande que la hauteur des témoins d'usure réglementaire, ces cas représentant l'immense majorité des pneumatiques pour véhicule de tourisme, ces rainures circonférentielles principales présentent une profondeur de façon à être pérenne sur plus de la moitié du potentiel d'usure du pneumatique. Ainsi, de telles rainures circonférentielles principales présentant une profondeur supérieure ou égale à 50% de la hauteur de sculpture ne disparaissent pas avant que le pneumatique ait consommé au moins 50% de son potentiel d'usure. On définit le potentiel d'usure comme la hauteur radiale entre, lorsque le pneumatique est à l'état neuf, le point le plus radialement externe d'un témoin d'usure réglementaire et son projeté sur le sol lors du roulage du pneumatique. De tels témoins d'usure réglementaires sont imposés, par exemple par les règlements des Nations Unies R30 et R54, des Etats-Unis d'Amérique FMVSS139 ou encore de la Chine GB97743 et visent à indiquer à l'utilisateur du pneumatique un seuil d'usure réglementaire du pneumatique au-delà duquel il est risqué de rouler, notamment sur sol mouillé.

De façon classique, on détermine la surface de roulement sur un pneumatique monté sur une jante nominale et gonflé à la pression nominale au sens de la norme de la European Tyre and Rim Technical Organisation ou « ETRTO », 2019. Dans le cas d'une frontière évidente entre la surface de roulement et le reste du pneumatique, la largeur axiale de la surface de roulement est simplement mesurée. Dans le cas où la surface de roulement est continue avec les surfaces externes des flancs du pneumatique, la limite axiale de la surface de roulement passe par le point pour lequel l'angle entre la tangente à la surface de roulement et une droite parallèle à la direction axiale passant par ce point est égal à 30°. Lorsqu'il existe sur un plan de coupe méridienne, plusieurs points pour lesquels ledit angle est égal en valeur absolue à 30°, on retient le point radialement le plus à l'extérieur.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend, dans un plan de coupe méridienne, le plan passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques de l'invention sont destinés à des véhicule de tourisme tels que définis au sens de la norme de la European Tyre and Rim Technical Organisation ou « ETRTO », 2019. Un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019telles que le rapport H/S, exprimé en pourcentage, est au plus égal à 90, de préférence au plus égal à 80 et plus préférentiellement au plus égal à 70 et est au moins égal à 30, de préférence au moins égal à 40, et la largeur de section nominale S est au moins égale à 115 mm, de préférence au moins égale à 155 mm et plus préférentiellement au moins égale à 175 mm et au plus égal à 385 mm, de préférence au plus égal à 315 mm, plus préférentiellement au plus égal à 285 mm et encore plus préférentiellement au plus égal à 255 mm. En outre le diamètre au crochet D, définissant le diamètre de la jante de montage du pneumatique, est au moins égal à 12 pouces, de préférence au moins égal à 16 pouces et au plus égal à 24 pouces, de préférence au plus égal à 20 pouces.

Avantageusement, de façon à ne prendre en compte que les découpures transversales qui contribuent le plus au bruit extérieur émis par le pneumatique de par leur profondeur, l'ensemble des N découpures transversales à prendre en compte pour le calcul du pas moyen présente une profondeur supérieure ou égale à 30% et de préférence supérieure ou égale à 40% de la hauteur de sculpture.

De façon analogue, de façon à ne prendre en compte que les découpures transversales qui contribuent le plus au bruit extérieur émis par le pneumatique de par leur largeur, l'ensemble des N découpures transversales à prendre en compte pour le calcul du pas moyen présente une longueur axiale supérieure ou égale à 30%, de préférence supérieure ou égale à 50%, et plus préférentiellement supérieure ou égale à 75% de la largeur axiale de la nervure centrale ou de la portion axialement latérale.

Bien entendu, de façon à prendre en compte les découpures transversales qui contribuent le plus au bruit extérieur émis par le pneumatique de par à la fois leur largeur et à la fois de par leur longueur axiale, on privilégiera pour le calcul du pas moyen, dans un mode de réalisation très préféré, la prise en compte des découpures transversales présentant une profondeur supérieure ou égale à 40% de la hauteur de sculpture et une longueur axiale supérieure ou égale à 75% de la largeur axiale de la nervure centrale ou de la portion axialement latérale.

Dans un mode de réalisation préféré, au moins une des portions axiales de la ou chaque nervure centrale satisfait la condition I ou Il et au moins une des portions axiales de chaque première et deuxième portion axialement latérale satisfait la condition III, de préférence au moins une des portions axiales de la ou chaque nervure centrale satisfait la condition I et au moins une des portions axiales de chaque première et deuxième portion axialement latérale satisfait la condition III.

En phase d'accélération, le véhicule se décharge à l'avant de sorte que la portion axialement centrale va être au contact avec le sol de roulage et que les première et deuxième portions axialement latérales vont l'être peu ou pas. Afin de réduire le plus possible le bruit émis lors de cette phase d'accélération, notamment pour des véhicules transmettant le couple par les roues avant, on préfère donc rendre la portion axialement centrale la plus silencieuse possible et donc avoir une ou des nervures centrales présentant un nombre faible voire nul de découpures transversales.

De façon avantageuse et afin d'éviter autant que possible de superposer le spectre fréquentiel du bruit issu l'excitation des découpures et le spectre fréquentiel du bruit issu de la structure mécanique, l'ensemble des N découpures transversales de la ou de chaque nervure centrale ou de la ou de chaque portion axialement latérale présentant une profondeur supérieure ou égale à 20% de la hauteur de sculpture et une longueur axiale supérieure ou égale à 20% de la largeur axiale de la ou chaque nervure centrale ou de la ou de chaque portion axialement latérale et satisfaisant la condition II est agencé préférentiellement de sorte que π x OD / N ≥ 60 mm et encore plus préférentiellement de sorte que π x OD / N ≥ 80 mm.

Dans un mode de réalisation préféré, l'ensemble des N découpures transversales de la ou de chaque nervure centrale ou de la ou de chaque portion axialement latérale présentant une profondeur supérieure ou égale à 20% de la hauteur de sculpture et une longueur axiale supérieure ou égale à 20% de la largeur axiale de la ou chaque nervure centrale ou de la ou de chaque portion axialement latérale et satisfaisant la condition III est agencé de sorte que π x OD / N ≥ 10 mm, de préférence π x OD / N ≥ 15 mm.

En limitant le nombre de découpures transversales dans l'aire de contact du pneumatique, on évite de trop diminuer la surface de la bande de roulement en contact avec le sol et donc de trop augmenter la pression exercée par le sol sur chacune des arêtes formant les bords des découpures transversales. On évite ainsi une dégradation de l'adhérence sur sol sec qui est inversement fonction de la pression exercée par le sol sur la bande de roulement.

De façon avantageuse et afin d'éviter autant que possible de superposer le spectre fréquentiel du bruit issu l'excitation des découpures et le spectre fréquentiel du bruit issu de la structure mécanique, l'ensemble des N découpures transversales de la ou de chaque nervure centrale ou de la ou de chaque portion axialement latérale présentant une profondeur supérieure ou égale à 20% de la hauteur de sculpture et une longueur axiale supérieure ou égale à 20% de la largeur axiale de la ou chaque nervure centrale ou de la ou de chaque portion axialement latérale et satisfaisant la condition III est agencé préférentiellement de sorte que π x OD / N ≤ 22 mm et encore plus préférentiellement de sorte que π x OD / N ≤ 20 mm.

Très avantageusement, de façon à limiter autant que possible le bruit extérieur émis par la ou les portions ne satisfaisant aucune des conditions I, II et III, la largeur axiale de l'ensemble de la ou des portions axiales de la ou de chaque nervure centrale et de chaque première et deuxième portion axialement latérale satisfaisant chacune une seule des conditions I, II, III est supérieure ou égale à 80%, de préférence à 90% de la largeur axiale de la ou chaque nervure centrale et de chaque première et deuxième portion axialement latérale.

Comme expliqué précédemment, de façon à minimiser la diversité des zones de transition en réduisant le nombre de conditions satisfaites sur une même nervure centrale ou une même portion axialement latérale, la ou chaque nervure centrale ou la première portion axialement latérale ou la deuxième portion axialement latérale comprenant plusieurs portions axiales satisfaisant chacune une seule des conditions I, II, III, l'ensemble des portions axiales de la ou chaque nervure centrale ou de la première portion axialement latérale ou de la deuxième portion axialement latérale satisfait une seule des conditions I, II, III.

Comme expliqué précédemment, de façon à minimiser le nombre de zones de transition en minimisant le nombre de portions axiales ne satisfaisant aucune des conditions I, Il et III venant s'intercaler axialement entre différentes portions axiales satisfaisant une seule condition I, II et III, la ou chaque nervure centrale et chaque première et deuxième portion axialement latérale comprend une portion axiale satisfaisant une seule des conditions I, II, III et présentant une largeur axiale supérieure ou égale à 70%, de préférence à 80% et plus préférentiellement à 90% de la largeur axiale de la ou chaque nervure centrale et de chaque première et deuxième portion axialement latérale.

Dans un mode de réalisation avantageux, le rapport de la largeur axiale de la portion centrale sur la largeur axiale de chaque première et deuxième portion axialement latérale est supérieur ou égale à 3,0, de préférence va de 3,0 à 5,0 et plus préférentiellement va de 4,0 à 4,5.

Dans ce mode de réalisation, la portion axialement centrale est celle présentant la plus grande largeur axiale relativement aux première et deuxième portions axialement latérales. Ce mode de réalisation est particulièrement avantageux lorsque la ou chaque nervure satisfait la condition I ou II ce qui permet de réduire d'autant plus le bruit généré par les découpures transversales que la largeur axiale de la portion axialement centrale est petite.

Avantageusement, la portion axialement centrale présente une largeur axiale supérieure ou égale à 50%, de préférence supérieure ou égale à 60% de la largeur axiale de la surface de roulement du pneumatique à l'état neuf. Avantageusement, la portion axialement centrale présente une largeur axiale inférieure ou égale à 80%, de préférence inférieure ou égale à 70% de la largeur axiale de la surface de roulement du pneumatique à l'état neuf.

Avantageusement, chaque première et deuxième portion axialement latérale présente une largeur axiale inférieure ou égale à 25%, de préférence inférieure ou égale à 20% de la largeur axiale de la surface de roulement du pneumatique à l'état neuf. Avantageusement, chaque première et deuxième portion axialement latérale présente une largeur axiale supérieure ou égale à 5%, de préférence supérieure ou égale à 10% de la largeur axiale de la surface de roulement du pneumatique à l'état neuf.

Selon des caractéristiques avantageuses de chaque rainure circonférentielle principale :
- chaque rainure circonférentielle principale présente une profondeur allant de 4,0 mm à la hauteur de sculpture, de préférence allant de 5,0 mm à la hauteur de sculpture et plus préférentiellement allant de 5,5 mm à la hauteur de sculpture.
- chaque rainure circonférentielle principale présente une largeur supérieure ou égale à 1,0 mm, de préférence supérieure ou égale à 5,0 mm et plus préférentiellement supérieure ou égale à 8,0 mm et encore plus préférentiellement allant de 8,0 mm à 15,0 mm.

De façon avantageuse, chaque première et deuxième portion axialement latérale comprenant des découpures transversales s'étendant axialement depuis une extrémité axialement extérieure jusqu'à une extrémité axialement intérieure, au moins 50%, de préférence au moins 75% et encore plus préférentiellement chacune des découpures transversales de chaque première et deuxième portion axialement latérale est obturée au moins partiellement par un pont de jonction des faces d'attaque et de fuite formant l'extrémité axialement intérieure de la découpure transversale. De façon à ne prendre en compte que les découpures transversales contribuant le plus au bruit, la caractéristique précédente s'applique préférentiellement à l'ensemble des N découpures transversales présentant une profondeur supérieure ou égale à 20% de la hauteur de sculpture et une longueur supérieure ou égale à 20% de la largeur axiale de chaque première et deuxième portion axialement latérale.

En d'autres termes, le pont de jonction forme une partie de la face axialement extérieure de la première ou de la deuxième rainure circonférentielle principale. D'une part, grâce à la présence du pont de jonction, on limite voire on supprime totalement la communication de l'air entre les découpures transversales et les rainures circonférentielles principales de la portion axialement centrale et donc la résonance sonore de la colonne d'air potentielle pouvant intervenir entre les découpures transversales et les rainures circonférentielles.

Encore plus avantageusement, le pont de jonction est agencé de façon à obturer intégralement la communication entre la découpure transversale et la première ou la deuxième rainure circonférentielle principale lorsque la découpure transversale passe dans l'aire de contact du pneumatique avec un sol de roulage. Ainsi, on supprime tout risque de résonance sonore de la colonne d'aire entre les découpures transversales et les rainures circonférentielles.

Selon des caractéristiques avantageuses de chaque découpure transversale:
- chaque découpure transversale présente une profondeur allant de 2,0 mm à la hauteur de sculpture, de préférence allant de 4,0 mm à la hauteur de sculpture et plus préférentiellement allant de 5,0 mm à la hauteur de sculpture,
- chaque découpure transversale présente une largeur inférieure ou égale à 2,0 mm, de préférence allant de 0,5 mm à 2,0 mm.

Avantageusement, au moins une des découpures transversales d'au moins une des première et deuxième portions axialement latérales, de préférence au moins 25%, et plus préférentiellement au moins 40% des découpures transversales d'au moins une des première et deuxième portions axialement latérales comprend une portion principale et une portion complémentaire séparées l'une de l'autre par une discontinuité de la courbure de chaque face latérale de sorte que :
- la portion principale s'étend sur une longueur curviligne principale strictement supérieure à 50% de la longueur curviligne totale de la découpure transversale,
- la portion complémentaire s'étend sur une longueur curviligne complémentaire strictement inférieure à 50% de la longueur curviligne totale de la découpure transversale, la portion complémentaire étant agencée axialement à l'extérieur de la portion principale et présentant une largeur supérieure à la largeur de la portion principale.

De telles portions complémentaires permettent une évacuation efficace de l'eau et donc une performance améliorée d'adhérence sur sol mouillé.

Selon une caractéristique préférée du pneumatique, le taux d'entaillement surfacique de la bande de roulement va de 27% à 45%, de préférence de 30% à 40%.

Selon une autre caractéristique préférée du pneumatique, le taux d'entaillement volumique de la bande de roulement va de 17% à 35%, de préférence de 20% à 30%.

De tels taux d'entaillement surfacique et volumique permettent de garantir une évacuation efficace de l'eau dans des conditions de roulage sur sol mouillé.

De préférence, le taux d'entaillement surfacique de chaque première et deuxième portion axialement latérale va de 20% à 30%.

Toujours de façon préférée, le taux d'entaillement volumique de chaque première et deuxième portion axialement latérale va de 5% à 10%.

De préférence, le taux d'entaillement surfacique de la portion axialement centrale va de 35% à 45%.

Toujours de façon préférée, le taux d'entaillement volumique de la portion axialement centrale va de 25% à 35%.

De préférence, le taux d'entaillement surfacique de la ou chaque nervure centrale va de 5% à 10%.

Toujours de façon préférée, le taux d'entaillement volumique de la ou chaque nervure centrale va de 0,5% à 5%, de préférence va de 0,5% à 2%.

Avantageusement, le rapport du taux d'entaillement surfacique de la ou chaque nervure centrale sur le taux d'entaillement surfacique de chaque première et deuxième portion axialement latérale est inférieur ou égal à 0,35, de préférence inférieur ou égal à 0,30 et plus préférentiellement va de 0,10 à 0,30.

Toujours avantageusement, le rapport du taux d'entaillement volumique de la ou chaque nervure centrale sur le taux d'entaillement de chaque première et deuxième portion axialement latérale est inférieur ou égal à 0,20, de préférence inférieur ou égal à 0,15 et plus préférentiellement va de 0,10 à 0,15.

Le taux d'entaillement surfacique de la bande de roulement, d'une portion de la bande de roulement ou d'une nervure est le rapport de :
- la différence entre l'aire totale AT de l'empreinte de contact de la bande de roulement, de la portion de la bande de roulement ou de la nervure du pneumatique à l'état neuf gonflé à pression nominale et sous une charge nominale avec un sol de roulage lisse, par exemple une vitre, et l'aire de contact AC des éléments de la bande de roulement, de la portion de la bande de roulement ou de la nervure avec le sol de roulage et
- l'aire totale AT de l'empreinte de contact de la bande de roulement, de la portion de la bande de roulement ou de la nervure du pneumatique à l'état neuf gonflé à pression nominale et sous une charge nominale avec le sol de roulage lisse.

Le taux d'entaillement volumique de la bande de roulement, d'une portion de la bande de roulement ou d'une nervure est le rapport du volume total des découpures de la bande de roulement, de la portion de la bande de roulement ou de la nervure du pneumatique à l'état neuf sur le volume total de la bande de roulement, de la portion de la bande de roulement ou de la nervure d'un pneumatique identique à l'état neuf mais ne comprenant aucune découpure. La bande de roulement est axialement délimitée par deux plans perpendiculaires à l'axe de rotation du pneumatique et passant par les bords axiaux de la surface de roulement. La portion ou la nervure de la bande de roulement est délimitée par deux plans perpendiculaires à l'axe de rotation du pneumatique passant par les extrémités bords axiaux de la portion ou de la nervure. La bande de roulement, la portion de la bande de roulement ou la nervure est radialement délimitée par la surface de roulement et par une courbe parallèle à la surface de roulement du pneumatique à l'état neuf et passant par le point le plus radialement interne de la découpure la plus profonde de la bande de roulement du pneumatique à l'état neuf.

Afin de déterminer le taux d'entaillement surfacique, la charge nominale est égale à 80% de la capacité de charge de la norme de la European Tyre and Rim Technical Organisation ou « ETRTO », 2019 et la pression nominale est égale à 2,5 bars.

Dans un mode de réalisation avantageux, la portion axialement centrale comprend au moins une troisième rainure circonférentielle principale et au moins des première et deuxième nervures centrales agencées de sorte que :
- la première nervure centrale est axialement comprise entre la première rainure circonférentielle principale et la troisième rainure circonférentielle principale,
- la deuxième nervure centrale est axialement comprise entre la deuxième rainure circonférentielle principale et la troisième rainure circonférentielle principale.

Ainsi, pour une largeur axiale donnée de la portion axialement centrale, en augmentant le nombre de nervures centrales, on améliore l'évacuation de l'eau sur l'ensemble de la largeur axiale de la bande de roulement.

Dans un mode de réalisation encore plus préféré, la portion axialement centrale comprend des troisième et quatrième rainures circonférentielles principales et au moins des première, deuxième et troisième nervures centrales agencées de sorte que :
- la première nervure centrale est axialement comprise entre la première rainure circonférentielle principale et la troisième rainure circonférentielle principale,
- la deuxième nervure centrale est axialement comprise entre la troisième rainure circonférentielle principale et la quatrième rainure circonférentielle principale, et
- la troisième nervure centrale est axialement comprise entre la quatrième rainure circonférentielle principale et la deuxième rainure circonférentielle principale.

On améliore encore davantage l'évacuation de l'eau grâce à la présence de trois nervures centrales.

Dans ce mode de réalisation davantage préféré :
- la première nervure centrale s'étend axialement depuis un bord axialement intérieur de la première rainure circonférentielle principale jusqu'à un bord axialement extérieur de la troisième rainure circonférentielle principale,
- la deuxième nervure centrale s'étend axialement depuis un bord axialement extérieur de la troisième rainure circonférentielle principale jusqu'à un bord axialement intérieur de la quatrième rainure circonférentielle principale, et
- la troisième nervure centrale s'étend axialement depuis un bord axialement extérieur de la quatrième rainure circonférentielle principale jusqu'à un bord axialement intérieur de la deuxième rainure circonférentielle principale.

Dans les modes de réalisation qui précédent, la ou chaque nervure centrale présente une largeur axiale inférieure ou égale à 30%, de préférence inférieure ou égale à 25% de la largeur axiale de la portion axialement centrale. Ainsi, indépendamment du nombre de nervures centrales, on favorise l'évacuation de l'eau par chacune des nervures centrales en réduisant la largeur axiale de chacune de ces nervures centrales.

De façon à avoir une surface de roulement suffisante pour réduire la pression locale exercée par le sol sur le pneumatique et donc assurer une bonne adhérence sur sol sec, la ou chaque nervure centrale présente une largeur axiale suffisante et supérieure ou égale à 10%, de préférence supérieure ou égale à 15% de la largeur axiale de la portion axialement centrale.

Dans un mode de réalisation très préféré, la ou chaque nervure centrale présente une largeur axiale allant de 20 mm à 40 mm, de préférence de 25 mm à 35 mm.

Dans un mode de réalisation permettant d'améliorer l'adhérence sur sol mouillé tout en ne générant pas ou peu de bruit supplémentaire dans la portion axialement centrale et en ne dégradant pas le comportement du pneumatique, la ou au moins une des nervures centrales, de préférence chaque nervure centrale comprend au moins une découpure circonférentielle complémentaire, la ou chaque découpure circonférentielle complémentaire:
- étant agencée axialement entre les deux rainures circonférentielles entre lesquelles est compris la ou chaque nervure centrale, et
- présentant une profondeur strictement inférieure à 50%, de la hauteur de sculpture, de préférence inférieure ou égale à 30% de la hauteur de sculpture et plus préférentiellement allant de 10% à 30% de la hauteur de sculpture.

En effet, de par son orientation circonférentielle et donc de par l'orientation circonférentielle des bords des faces latérales de la ou chaque découpure circonférentielle complémentaire, la ou chaque découpure circonférentielle complémentaire ne contribue pas ou peu à la génération du bruit issu de l'excitation des découpures car aucune arête de la ou chaque découpure circonférentielle complémentaire ne vient frapper le sol lors du roulage du pneumatique.

De par le volume de vide qu'elle crée, la ou chaque découpure circonférentielle complémentaire permet de stocker l'eau lors d'un roulage sur sol mouillé et donc l'amélioration de l'adhérence sur sol mouillé. De plus, chaque découpure circonférentielle complémentaire sépare la nervure centrale dans laquelle elle est ménagée en deux portions axiales délimitée chacune par, d'une part, une découpure circonférentielle principale et d'autre part, une découpure circonférentielle complémentaire. Ainsi, chacune des portions axiales de la nervure centrale présente une largeur axiale plus faible que si elle n'avait pas de découpure circonférentielle complémentaire et donc une capacité à évacuer l'eau depuis le milieu de chaque portion axiale jusque vers chaque découpure circonférentielle principale et complémentaire plus importante.

Enfin, en raison de leur profondeur relativement faible, la ou chaque découpure circonférentielle complémentaire ne dégrade pas le comportement du pneumatique, notamment en rigidité latérale.

Selon des caractéristiques avantageuses :
- la largeur axiale de la ou chaque découpure circonférentielle complémentaire de la ou de chaque nervure centrale va de 4% à 15%, de préférence de 4% à 10% de la largeur axiale de la ou de chaque nervure centrale. Dans un mode de réalisation très préféré, la largeur axiale de la ou chaque découpure circonférentielle complémentaire va de 1,0 mm à 4,0 mm.
- la profondeur de la ou chaque découpure circonférentielle complémentaire est inférieure ou égale à 3,0 mm, de préférence va de 1,0 mm à 3,0 mm.

En privilégiant des découpures circonférentielles complémentaires plus larges que profondes, on réduit la largeur axiale de chacune des portions axiales de la nervure centrale agencées de part et d'autre de la découpure circonférentielle complémentaire et donc on améliore la capacité du pneumatique à évacuer l'eau vers chaque découpure circonférentielle principale et complémentaire et ce, d'autant plus que la largeur axiale de la ou chaque découpure circonférentielle complémentaire est grande. Néanmoins, cette largeur axiale ne doit pas être trop importante de façon à avoir une surface de roulement suffisante pour réduire la pression locale exercée par le sol sur le pneumatique et donc assurer une bonne adhérence sur sol sec.

Dans un mode de réalisation permettant d'améliorer l'adhérence sur sol mouillé tout en ne générant pas ou peu de bruit supplémentaire dans la première portion axialement latérale et en ne dégradant pas le comportement du pneumatique, de façon analogue à la portion axialement centrale, la première portion axialement latérale comprend au moins une découpure circonférentielle complémentaire:
- agencée axialement entre la première rainure circonférentielle et la première extrémité axiale de la surface de roulement, et
- présentant une profondeur strictement inférieure à 50% de la hauteur de sculpture, de préférence inférieure ou égale à 30% de la hauteur de sculpture et plus préférentiellement allant de 10% à 30% de la hauteur de sculpture.

De façon analogue, afin de d'améliorer l'adhérence sur sol mouillé tout en ne générant pas ou peu de bruit supplémentaire dans la deuxième portion axialement latérale et en ne dégradant pas le comportement du pneumatique, de façon analogue à la portion axialement centrale et à la première portion axialement latérale, la deuxième portion axialement latérale comprend au moins une découpure circonférentielle complémentaire:
- agencée axialement entre la deuxième rainure circonférentielle et la deuxième extrémité axiale de la surface de roulement, et
- présentant une profondeur strictement inférieure à 50% de la hauteur de sculpture, de préférence inférieure ou égale à 30% de la hauteur de sculpture et plus préférentiellement allant de 10% à 30% de la hauteur de sculpture.

Selon des caractéristiques avantageuses, permettant de façon analogues aux découpures circonférentielle complémentaire de la portion axialement centrale d'améliorer la capacité du pneumatique à évacuer l'eau tout en assurant une bonne adhérence sur sol sec:
- la largeur axiale de la ou chaque découpure circonférentielle complémentaire de la première portion axialement latérale va de 3% à 15%, de préférence de 3% à 10% de la largeur axiale de la première portion axialement latérale.
- la largeur axiale de la ou chaque découpure circonférentielle complémentaire de la deuxième portion axialement latérale va de 3% à 15%, de préférence de 3% à 10% de la largeur axiale de la deuxième portion axialement latérale.

Dans un mode de réalisation très préféré :
- la largeur axiale de la ou chaque découpure circonférentielle complémentaire, que cette découpure circonférentielle complémentaire soit ménagée dans la première portion axialement latérale ou dans la deuxième portion axialement latérale va de 1,0 mm à 4,0 mm,
- la profondeur de la ou chaque découpure circonférentielle complémentaire, que cette découpure circonférentielle complémentaire soit ménagée dans la première portion axialement latérale et/ou dans la deuxième portion axialement latérale, est inférieure ou égale à 3,0 mm, de préférence va de 1,0 mm à 3,0 mm.

Dans un mode de réalisation permettant de réduire la pression subie par les arêtes formant les bords des découpures et permettant donc d'améliorer l'adhérence sur sol sec, au moins une des rainures circonférentielles principales est munie de chanfreins. En d'autres termes, chaque rainure circonférentielle principale entre laquelle est comprise la ou une des nervures centrales étant délimitée axialement par des faces axialement intérieure et extérieure délimitant axialement vers l'intérieur et vers l'extérieur ladite rainure circonférentielle principale et reliées entre elles par une face de fond délimitant radialement vers l'intérieur ladite rainure circonférentielle principale, au moins une des rainures circonférentielles, de préférence chaque rainure circonférentielle principale, est agencée de sorte qu'au moins une des faces axialement intérieure et extérieure est reliée par un chanfrein à au moins un des bords axialement intérieur et extérieur de ladite rainure circonférentielle principale, de préférence chaque face axialement intérieure et extérieure est reliée par un chanfrein respectivement à chaque bord axialement intérieur et extérieur de chaque rainure circonférentielle principale.

Un chanfrein d'une découpure circonférentielle peut être un chanfrein droit ou un chanfrein arrondi. Un chanfrein droit est formé par une face plane inclinée par rapport à la face axialement intérieure et extérieure qu'elle prolonge jusqu'au bord axialement intérieur ou extérieur délimitant axialement la découpure circonférentielle. Un chanfrein arrondi est formé par une face courbe se raccordant tangentiellement à la face axialement intérieure ou extérieure qu'elle prolonge. Un chanfrein d'une découpure circonférentielle est caractérisé par une hauteur et une largeur égale respectivement à la distance radiale et à la distance axiale entre le point commun entre la face axialement intérieure ou extérieure prolongée par le chanfrein et le bord axialement intérieur ou extérieur délimitant axialement la découpure circonférentielle.

Toujours dans le but d'améliorer l'adhérence sur sol sec, dans le cas où la condition II et/ou III est satisfaite, au moins 50%, de préférence au moins 75% des découpures transversales et encore plus préférentiellement chaque découpure transversale est munie de chanfreins. En d'autres termes, chaque découpure transversale étant délimitée radialement par des faces d'attaque et de fuite délimitant circonférentiellement ladite découpure transversale et reliées entre elles par une face de fond délimitant radialement vers l'intérieur ladite découpure transversale, au moins 50%, de préférence au moins 75% des découpures transversales et encore plus préférentiellement chaque découpure transversale, est agencée de sorte qu'au moins une des faces d'attaque et de fuite est reliée par un chanfrein à au moins un des bords d'attaque et de fuite de ladite découpure transversale, de préférence chaque face d'attaque et de fuite est reliée par un chanfrein respectivement à chaque bord d'attaque et de fuite de chaque découpure transversale.

Un chanfrein d'une découpure transversale peut être un chanfrein droit ou un chanfrein arrondi. Un chanfrein droit est formé par une face plane inclinée par rapport à la face d'attaque ou de fuite qu'elle prolonge jusqu'au bord d'attaque ou de fuite délimitant circonférentiellement la découpure transversale. Un chanfrein arrondi est formé par une face courbe se raccordant tangentiellement à la face d'attaque ou de fuite qu'elle prolonge. Un chanfrein d'une découpure transversale est caractérisé par une hauteur et une largeur égale respectivement à la distance radiale et à la distance selon une direction perpendiculaire aux faces d'attaque ou de fuite entre le point commun entre la face d'attaque ou de fuite prolongée par le chanfrein et le bord d'attaque ou de fuite délimitant circonférentiellement la découpure transversale.

De façon conventionnelle, le pneumatique comprend un sommet, deux flancs, deux bourrelets, chaque flanc reliant chaque bourrelet au sommet. Toujours de façon conventionnelle, le sommet comprend la bande de roulement et une armature de sommet agencée radialement à l'intérieur de la bande de roulement. Le pneumatique comprend également une armature de carcasse ancrée dans chaque bourrelet et s'étendant dans chaque flanc et radialement intérieurement au sommet.

De façon conventionnelle, l'armature de sommet comprend au moins une couche de sommet comprenant des éléments de renforcement. Ces éléments de renforcement sont préférentiellement des éléments filaires textiles ou métalliques.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renforcement filaires de carcasse, chaque élément de renforcement filaire de carcasse s'étendant sensiblement selon une direction principale formant avec la direction circonférentielle du pneumatique, un angle, en valeur absolue, allant de 80° à 90°.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien parallèle à l'axe de rotation du pneumatique, d'un pneumatique selon un premier mode de réalisation de l'invention,
- la figure 2 est une vue en arraché du pneumatique de la figure 1 illustrant l'agencement des éléments de renforcement filaires dans et sous le sommet,
- la figure 3 est une vue en perspective de la bande de roulement du pneumatique de la figure 1,
- la figure 4 est une vue, dans un plan de coupe méridien parallèle à l'axe de rotation du pneumatique, de la bande de roulement de la figure 3,
- la figure 5 est une vue de détails de la zone V de la figure 4,
- la figure 6 est une vue de détails de la zone VI de la figure 3,
- la figure 7 est une vue de détails de la zone VII de la figure 6,
- la figure 8 est une vue de détails de la zone VIII de la figure 6,
- la figure 9 est une vue schématique du pneumatique de la figure 1, et
- les figures 10 à 13 sont des vues analogues à celle de la figure 9 de pneumatiques selon des deuxième, troisième, quatrième et cinquième modes de réalisation de l'invention.

Dans les figures relatives au pneumatique, on a représenté un repère X, Y, Z correspondant aux directions habituelles respectivement axiale (Y), radiale (Z) et circonférentielle (X) d'un pneumatique.

Dans la description qui suit, les mesures réalisées sont, à l'exception des mesures du taux d'entaillement volumique et du taux d'entaillement surfacique, réalisées sur un pneumatique non chargé et non gonflé.

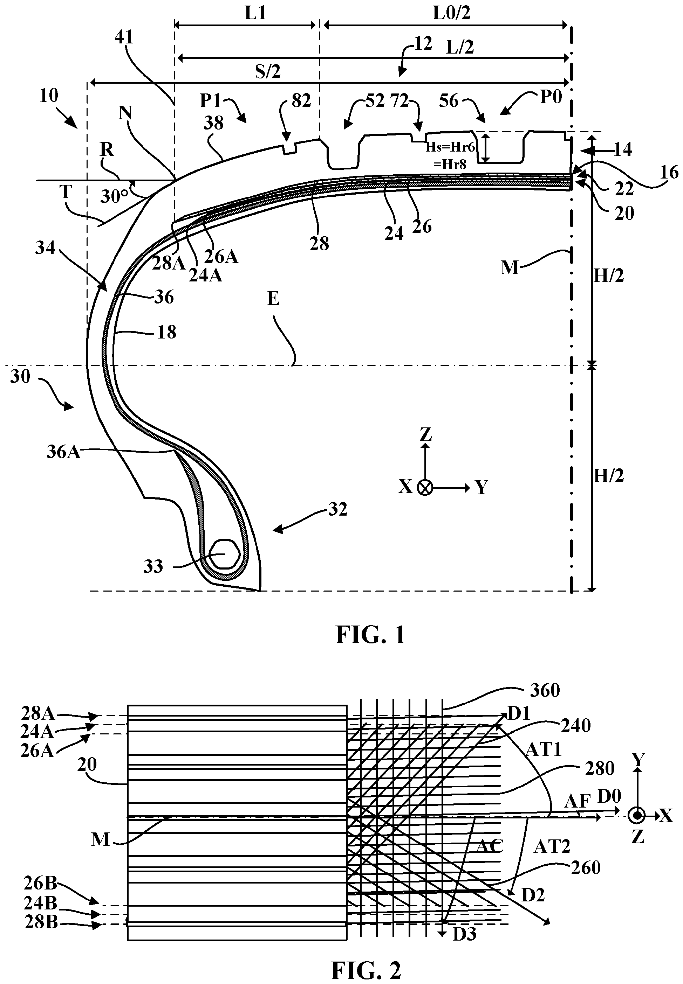

On a représenté sur la figure 1 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 245/45 R18. Sur les différentes figures, le pneumatique 10 est représenté à l'état neuf, c'est-à-dire n'ayant pas encore roulé. Le diamètre extérieur OD du pneumatique 10 est égal à 678 mm.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante.

L'armature de sommet 16 comprend une armature de travail 20 et une armature de frettage 22. L'armature de travail 16 comprend au moins une couche de travail et ici comprend deux couches de travail 24, 26. En l'espèce, l'armature de travail 16 est constituée des deux couches de travail 24, 26. La couche de travail 24 radialement intérieure est agencée radialement à l'intérieur de la couche de travail 26 radialement extérieure.

L'armature de frettage 22 comprend au moins une couche de frettage et comprend ici une couche de frettage 28. L'armature de frettage 22 est ici constituée de la couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14. De façon préférentielle, on pourra envisager que l'armature de frettage 22 présente une largeur axiale au moins aussi grande que la largeur axiale de l'armature de travail 20 et, en l'espèce, dans le mode de réalisation illustré à la figure 1, l'armature de frettage 22 présente une largeur axiale plus grande que la largeur axiale de l'armature de travail 20.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Le pneumatique 10 comprend une armature de carcasse 34 ancrée dans chaque bourrelet 32, en l'espèce est enroulée autour d'une tringle 33. L'armature de carcasse 34 s'étend dans chaque flanc 30 et radialement intérieurement au sommet 12. L'armature de sommet 16 est agencée radialement entre la bande de roulement 14 et l'armature de carcasse 34. L'armature de carcasse 34 comprend au moins une couche de carcasse et ici comprend une unique couche de carcasse 36. En l'espèce, l'armature de carcasse 34 est constituée de l'unique couche de carcasse 36.

Chaque couche de travail 24, 26 de frettage 28 et de carcasse 36 comprend une matrice élastomérique dans laquelle sont noyés un ou des éléments de renfort filaires de la couche correspondante. On va maintenant décrire ces couches en référence à la figure 2.

L'armature de frettage 22, ici la couche de frettage 28, est délimitée axialement par deux bords axiaux 28A, 28B de l'armature de frettage 22. L'armature de frettage 22 comprend un ou plusieurs éléments de renfort filaires de frettage 280 enroulés circonférentiellement hélicoïdalement de façon à s'étendre axialement du bord axial 28A à l'autre bord axial 28B de la couche de frettage 28 selon une direction principale D0 de chaque élément de renfort filaire de frettage 280. La direction principale D0 forme, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°. La couche de frettage 28 comprend une densité de 98 éléments de renfort filaires de frettage par décimètre de couche de frettage, cette densité étant mesurée perpendiculairement à la direction D0.

La couche de travail radialement intérieure 24 est délimitée axialement par deux bords axiaux 24A, 24B. La couche de travail radialement intérieure 24 comprend des éléments de renfort filaires de travail 240 s'étendant axialement du bord axial 24A à l'autre bord axial 24B les uns sensiblement parallèlement aux autres selon une direction principale D1. De façon analogue, la couche de travail radialement extérieure 26 est délimitée axialement par deux bords axiaux 26A, 26B. La couche de travail radialement extérieure 26 comprend des éléments de renfort filaires de travail 260 s'étendant axialement du bord axial 26A à l'autre bord axial 26B les uns sensiblement parallèlement aux autres selon une direction principale D2. La direction principale D1 selon laquelle s'étend chaque élément de renfort filaire de travail 240 de la couche de travail radialement intérieure 24 et la direction principale D2 selon laquelle s'étend chaque élément de renfort filaire de travail 260 de l'autre de la couche de travail radialement extérieure 26 forment, avec la direction circonférentielle X du pneumatique 10, des angles respectivement AT1 et AT2 d'orientations opposées. Chaque direction principale D1, D2 forme, avec la direction circonférentielle X du pneumatique 10, un angle respectivement AT1, AT2, en valeur absolue, strictement supérieur à 10°, de préférence allant de 15° à 50° et plus préférentiellement allant de 15° à 30°. Ici, AT1=-26° et AT2=+26°.

La couche de carcasse 36 est délimitée axialement par deux bords axiaux 36A, 36B. La couche de carcasse 36 comprend des éléments de renfort filaires de carcasse 360 s'étendant axialement du bord axial 36A à l'autre bord axial 36B de la couche de carcasse 36 selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage 280 comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage 280 comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre [dans un sens puis mis en hélice ensemble à 290 tours par mètre dans le sens opposé. Ces deux brins multifilamentaires sont enroulés en hélice l'un autour de l'autre. Dans cette variante, on aura AT1=-29° et AT2=+29°

Chaque élément de renfort filaire de travail 180 est un assemblage de deux monofilaments en acier enroulés en hélice au pas de 14 mm, chaque monofilament en acier présentant un diamètre égal à 0,30 mm. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S,. Dans une autre variante, chaque élément de renfort filaire de travail 180 est constitué d'un monofilament en acier présentant un diamètre égal à 0,30 mm. D'une manière plus générale, les monofilaments en acier présentent des diamètres allant de 0,25 mm à 0,32 mm.

Chaque élément de renfort filaire de carcasse 340 comprend classiquement deux brins multifilamentaires, chaque brin multifilamentaire étant constitué d'un filé de monofilaments de polyester, ici de PET, ces deux brins multifilamentaires étant mis en hélice individuellement à 240 tours par mètre dans un sens puis mis en hélice ensemble à 240 tours par mètre dans le sens opposé. Chacun de ces brins multifilamentaires présente un titre égal à 220 tex. Dans d'autres variantes, on pourra utiliser des titres égaux à 144 tex et des torsions égales à 420 tours par mètre ou des titres égaux à 334 tex et des torsions égales à 270 tours par mètre.

En référence aux figures 1, 3 et 4, la bande de roulement 14 comprend une surface de roulement 38 par l'intermédiaire de laquelle la bande de roulement 14 entre en contact avec le sol. La surface de roulement 38 est destinée à entrer en contact avec le sol lors du roulage du pneumatique 10 sur le sol et est délimitée axialement par des premier et deuxième bords axiaux 41, 42 passant par chaque point N agencé de part et d'autre du plan médian M et pour lequel l'angle entre la tangente T à la surface de roulement 38 et une droite parallèle R à la direction axiale Y passant par ce point est égal à 30°.

En référence aux figures 1 et 3 à 5, la bande de roulement 14 comprend une portion axialement centrale P0 et des première et deuxième portions axialement latérales P1, P2 agencées axialement à l'extérieur de la portion axialement centrale P0 de part et d'autre axialement de la portion axialement centrale P0 par rapport au plan médian M du pneumatique 10.

La portion axialement centrale P0 présente une largeur axiale L0 supérieure ou égale à 50%, de préférence supérieure ou égale à 60% et inférieure ou égale à 80%, de préférence inférieure ou égale à 70% de la largeur axiale L de la surface de roulement 38 du pneumatique 10 à l'état neuf.

Chaque première et deuxième portion axialement latérale P1, P2 présente une largeur axiale L1, L2 inférieure ou égale à 25%, de préférence inférieure ou égale à 20% et supérieure ou égale à 5%, de préférence supérieure ou égale à 10% de la largeur axiale L de la surface de roulement 38 du pneumatique 10 à l'état neuf.

Le rapport de la largeur axiale L0 de la portion centrale P0 sur la largeur axiale L1, L2 de chaque première et deuxième portion axialement latérale P1, P2 est supérieur ou égale à 3,0, de préférence va de 3,0 à 5,0 et plus préférentiellement va de 4,0 à 4,5.

Ici, L0=140 mm, L1=L2=33 mm et L=206 mm.

La portion axialement centrale comprend des rainures circonférentielles principales comprenant des première, deuxième, troisième et quatrième rainures circonférentielles principales respectivement désignées par les références 52, 54, 56, 58. Les première et deuxième rainures 52, 54 sont agencées axialement de part et d'autre du plan médian M du pneumatique 10 et sont les rainures circonférentielles principales axialement les plus extérieures de la bande de roulement 14.

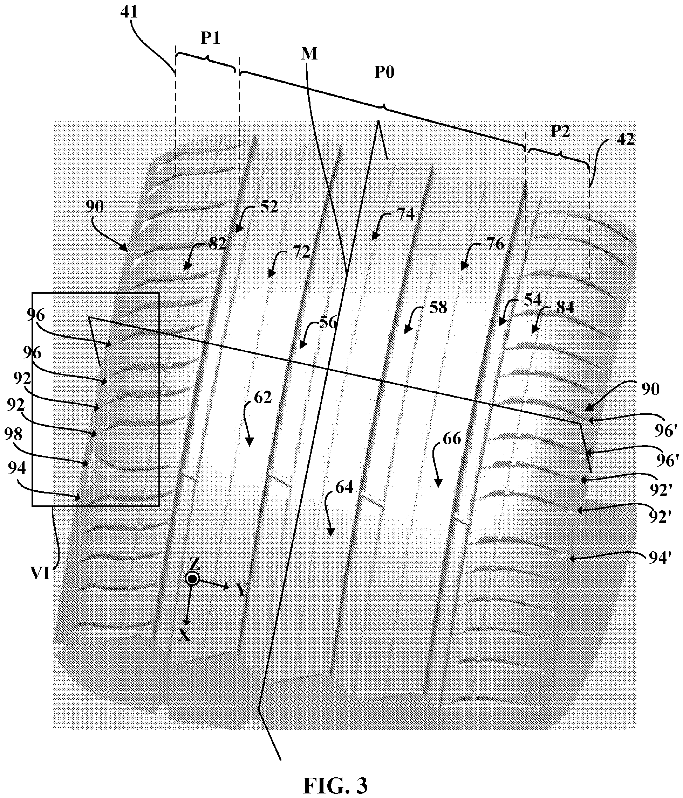

En référence aux figures 3 à 5, chaque première, deuxième, troisième et quatrième rainure circonférentielle principale 52, 54, 56, 58 est, à une cote radiale égale à la cote radiale de la surface de roulement 38, axialement délimitée par un bord axialement extérieur respectivement désigné par la référence 521, 541, 561, 581 et par un bord axialement intérieur respectivement désigné par la référence 522, 542, 562, 582.

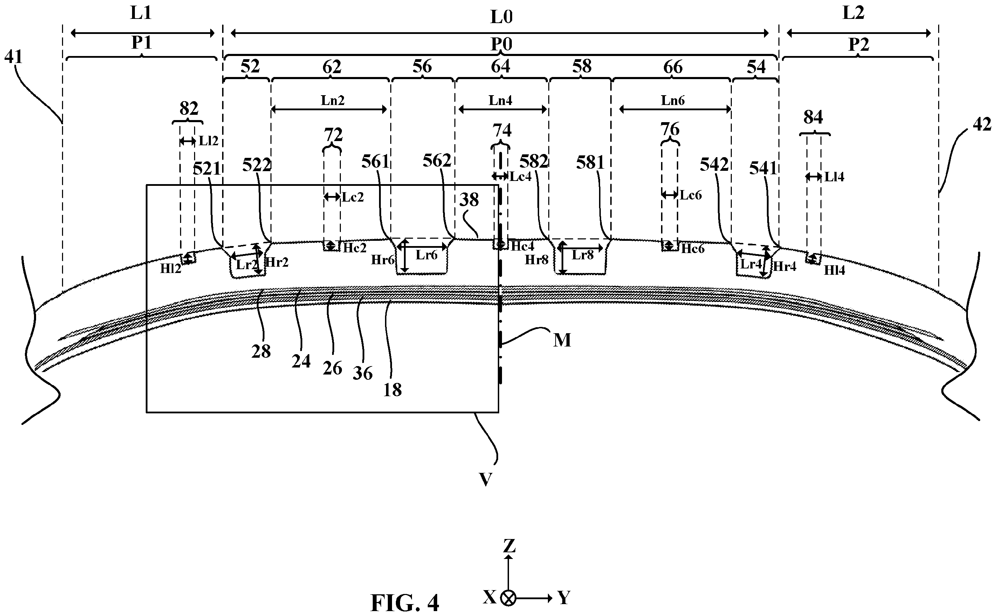

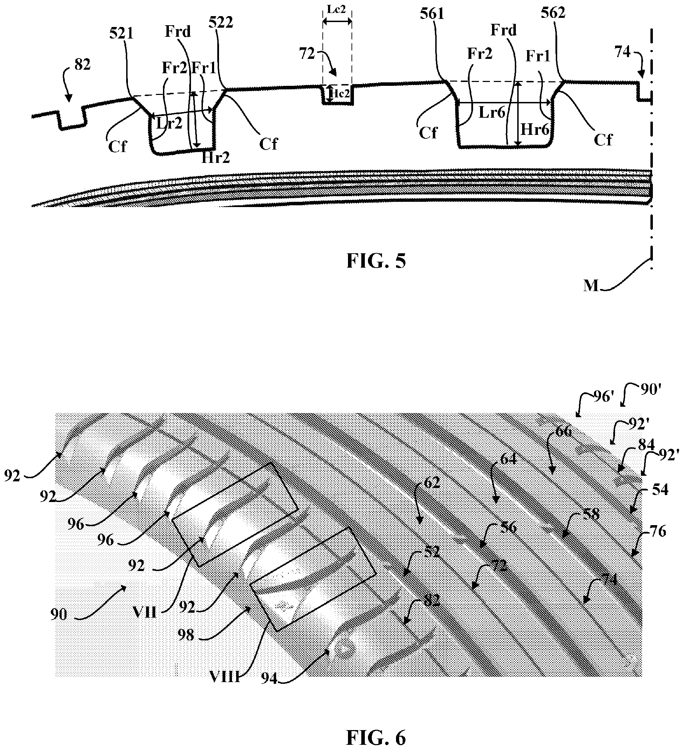

En référence aux figures 4 et 5, chaque rainure circonférentielle principale 52, 54, 56, 58 est, à une côte radialement interne à la cote radiale de la surface de roulement 38, délimitée axialement par une face latérale axialement intérieure Fr1 et une face latérale axialement extérieure Fr2 délimitant axialement chaque rainure circonférentielle principale 52, 54, 56, 58. Chaque rainure circonférentielle principale 52, 54, 56, 58 est délimitée radialement vers l'intérieur par une face de fond Frd.

Chaque rainure circonférentielle principale 52, 54, 56, 58 est munie de chanfreins, c'est-à-dire que chaque rainure circonférentielle principale 52, 54, 56, 58 est agencée de sorte qu'au moins une, ici chacune des faces axialement intérieure Fr1 et extérieure Fr2 est reliée par un chanfrein Cf à chacun des bords axialement intérieur 522, 542, 562, 582 et extérieur 521, 541, 561, 581 de ladite rainure circonférentielle principale 52, 54, 56, 58.

Chaque rainure circonférentielle principale 52, 54, 56, 58 présente une profondeur respectivement désignée par la référence Hr2, Hr4, Hr6, Hr8 et allant de 4,0 mm à la hauteur de sculpture Hs, de préférence allant de 5,0 mm à la hauteur de sculpture Hs et plus préférentiellement allant de 5,5 mm à la hauteur de sculpture Hs. Chaque profondeur Hr2, Hr4, Hr6, Hr8 est supérieure ou égale à 50% de la hauteur de sculpture Hs. Ici, Hs=Hr6=Hr8=6,5 mm et Hr2=Hr4=6,0 mm.

Chaque rainure circonférentielle principale 52, 54, 56, 58 présente une largeur respectivement désignée par la référence Lr2, Lr4, Lr6, Lr8 et supérieure ou égale à 1,0 mm, de préférence supérieure ou égale à 5,0 mm et plus préférentiellement supérieure ou égale à 8,0 mm et encore plus préférentiellement allant de 8,0 mm à 15,0 mm. Ici, Lr2=Lr4=10,0 mm et Lr6=Lr8=12,5 mm.

La portion axialement centrale P0 s'étend axialement depuis le bord axialement extérieur 521 de la première rainure circonférentielle principale 52 jusqu'au bord axialement extérieur 541 de la deuxième rainure circonférentielle principale 54.

La portion axialement centrale P0 comprend des première, deuxième et troisième nervures centrales respectivement désignées par les références 62, 64, 66. Chaque nervure centrale 62, 64, 66 est délimitée axialement par deux rainures circonférentielles principale, ici par deux des première, deuxième, troisième et quatrième rainures circonférentielles principales 52, 54, 56, 58.

La première nervure centrale 62 est agencée de sorte qu'elle est axialement comprise entre la première rainure circonférentielle principale 52 et la troisième rainure circonférentielle principale 56. Ici, la première nervure centrale 62 s'étend axialement depuis le bord axialement intérieur 522 de la première rainure circonférentielle principale 52 jusqu'à un bord axialement extérieur 561 de la troisième rainure circonférentielle principale 56.

La deuxième nervure centrale 64 est agencée de sorte qu'elle est axialement comprise entre la troisième rainure circonférentielle principale 56 et la quatrième rainure circonférentielle principale 58. Ici, la deuxième nervure centrale 64 s'étend axialement depuis un bord axialement intérieur 562 de la troisième rainure circonférentielle principale 56 jusqu'à un bord axialement intérieur 582 de la quatrième rainure circonférentielle principale 58.

La troisième nervure centrale 66 est agencée de sorte qu'elle est axialement comprise entre la quatrième rainure circonférentielle principale 58 et la deuxième rainure circonférentielle principale 54. Ici, la troisième nervure centrale 66 s'étend axialement depuis un bord axialement extérieur 581 de la quatrième rainure circonférentielle principale jusqu'à un bord axialement intérieur 542 de la deuxième rainure circonférentielle principale 54.

Chaque nervure centrale 62, 64, 66 présente une largeur axiale respectivement désignée par la référence Ln2, Ln4, Ln6 inférieure ou égale à 30%, de préférence inférieure ou égale à 25% et supérieure ou égale à 10%, de préférence supérieure ou égale à 15% de la largeur axiale L0 de la portion axialement centrale P1. Chaque largeur axiale Ln2, Ln4, Ln6 va de 20 mm à 40 mm, de préférence de 25 mm à 35 mm. Ici, Ln2=Ln4=Ln6=29,5 mm.

La portion axialement centrale P0 comprend au moins une découpure circonférentielle complémentaire ménagée dans une des nervures centrales 62, 64, 66. Ici, chaque nervure centrale 62, 64, 66 comprend respectivement une découpure circonférentielle complémentaire 72, 74, 76. Chaque découpure circonférentielle complémentaire 72, 74, 76 est agencée axialement respectivement entre les deux rainures circonférentielles 52 et 56, 56 et 58, 58 et 54 entre lesquelles est compris chaque nervure centrale 62, 64, 66.

Chaque découpure circonférentielle complémentaire 72, 74, 76 présente une profondeur strictement inférieure à 50% de la hauteur de sculpture Hs, de préférence inférieure ou égale à 30% de la hauteur de sculpture Hs et plus préférentiellement allant de 10% à 30% de la hauteur de sculpture Hs. Chaque découpure circonférentielle complémentaire 72, 74, 76 présente respectivement une largeur axiale Lc2, Lc4, Lc6 allant de 4% à 15%, de préférence de 4% à 10% respectivement de chaque largeur axiale Ln2, Ln4, Ln6. Chaque largeur axiale Lc2, Lc4, Lc6 va de 1,0 mm à 4,0 mm et ici Lc2=Lc4=Lc6=2,0 mm. Chaque découpure circonférentielle complémentaire 72, 74, 76 présente respectivement une profondeur Hc2, Hc4, Hc6 inférieure ou égale à 3,0 mm, de préférence allant de 1,0 mm à 3,0 mm et ici Hc2=Hc4=Hc6=1,0 mm.

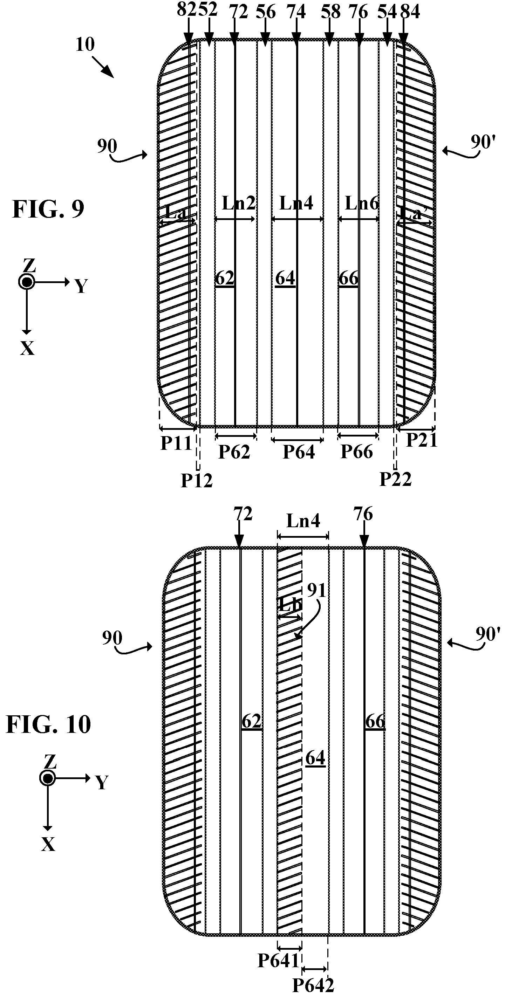

En référence à la figure 9, chaque nervure centrale 62, 64, 66 comprend une portion axiale respectivement P62, P64, P66 et ici est constituée par chaque portion axiale P62, P64, P66. Chaque portion axiale P62, P64, P66 présente une largeur axiale égale à chaque largeur axiale Ln2, Ln4 et Ln6. Chaque portion axiale P62, P64, P66 ne comprend aucune découpure transversale présentant une profondeur supérieure ou égale à 20% de la hauteur de sculpture Hs et une longueur axiale supérieure ou égale à 20% de la largeur axiale Ln2, Ln4 et Ln6 de chaque nervure centrale 62, 64, 66 de sorte que chacune de ces portions axiales P62, P64, P66 satisfait une seule des conditions I, II, III, ici la condition I. La largeur axiale de l'ensemble des portions axiales P62, P64, P66, ici la largeur axiale de chaque portion axiale P62, P64, P66 de chaque nervure centrale 62, 64, 66 est supérieure ou égale à 70%, de préférence à 80% et plus préférentiellement à 90% de la largeur axiale de chaque nervure centrale 62, 64, 66 et ici égale à 100% de chaque largeur axiale Ln2, Ln4, Ln6.

En référence à la figure 3, la première portion axialement latérale P1 est agencée de sorte qu'elle s'étend axialement depuis le premier bord axial 41 de la surface de roulement 38 jusqu'au bord axialement extérieur 521 de la première rainure circonférentielle principale 52.

La deuxième portion axialement latérale P2 est agencée de sorte qu'elle s'étend axialement depuis le deuxième bord axial 42 de la surface de roulement 38 jusqu'au bord axialement extérieur 541 de la deuxième rainure circonférentielle principale 54.

En référence aux figures 4 à 6, chaque première et deuxième portion axialement latérale P1, P2 comprend une découpure circonférentielle complémentaire 82, 84 ménagée dans chaque première et deuxième portion axialement latérale P1, P2. La découpure circonférentielle complémentaire 82 est agencée axialement entre la première rainure circonférentielle 52 et le premier bord axial 41 de la surface de roulement 38. La découpure circonférentielle complémentaire 84 est agencée axialement entre la deuxième rainure circonférentielle 54 et le deuxième bord axial 42 de la surface de roulement 38.

Chaque découpure circonférentielle complémentaire 82, 84 présente une profondeur strictement inférieure à 50% de la hauteur de sculpture Hs, de préférence inférieure ou égale à 30% de la hauteur de sculpture Hs et plus préférentiellement allant de 10% à 30% de la hauteur de sculpture Hs. Chaque découpure circonférentielle complémentaire 82, 84 présente respectivement une largeur axiale LI2, LI4 allant de 3% à 15%, de préférence de 3% à 10% respectivement de chaque largeur axiale L1, L2. Chaque largeur axiale LI2, LI4 va de 1,0 mm à 4,0 mm et ici LI2=LI4= 2,0 mm. Chaque découpure circonférentielle complémentaire 82, 84 présente respectivement une profondeur HI2, HI4 inférieure ou égale à 3,0 mm, de préférence allant de 1,0 mm à 3,0 mm et ici HI2=HI4=1,0 mm.

En référence à la figure 6, chaque portion axialement latérale P1, P2 comprend respectivement des découpures transversales 90, 90' présentant une profondeur supérieure ou égale à 20% de la hauteur de sculpture Hs. En l'espèce, toutes les découpures transversales 90, 90' de chaque portion axialement latérale P1, P2 présentent une profondeur Ht supérieure ou égale à 20%, de préférence à 30% et plus préférentiellement à 40% de la hauteur de sculpture Hs. Chaque découpure transversale 90, 90' présente une profondeur Ht allant de 2,0 mm à la hauteur de sculpture Hs, de préférence allant de 4,0 mm à la hauteur de sculpture Hs et plus préférentiellement allant de 5,0 mm à la hauteur de sculpture Hs et ici Ht=6,0 mm.

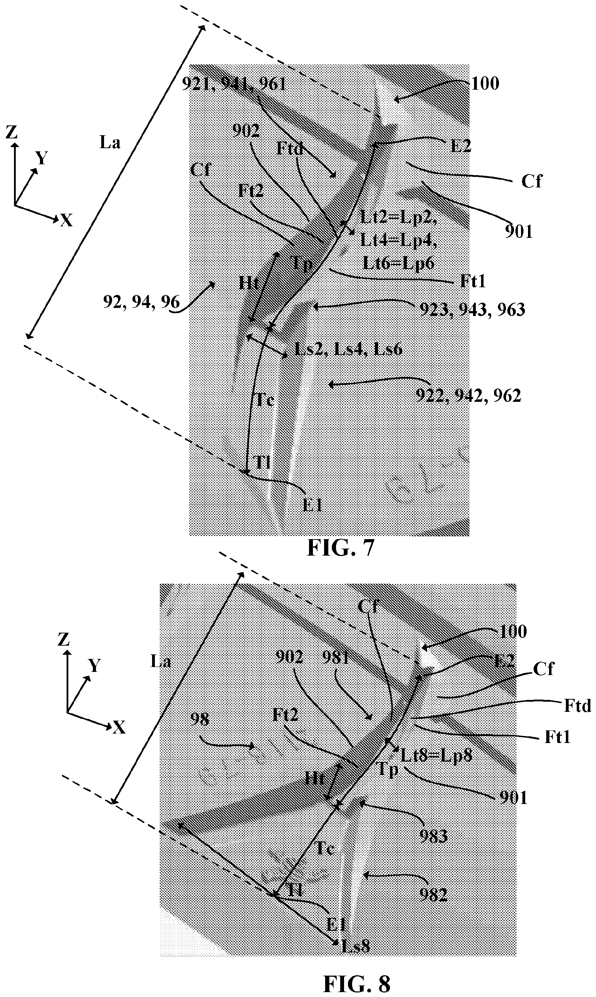

En référence aux figures 7 et 8, chaque découpure transversale 90, 90' est, à une cote radiale égale à la cote radiale de la surface de roulement 38, délimitée circonférentiellement par un bord d'attaque 901 et par un bord de fuite 902. Chaque découpure transversale 90, 90' est, à une côte radialement interne à la cote radiale de la surface de roulement 38, délimitée circonférentiellement par une face d'attaque Ft1 et une face de fuite Ft2. Chaque découpure transversale 90, 90' est délimitée radialement vers l'intérieur par une face de fond Ftd. Chaque découpure transversale 90, 90' est munie de chanfreins, c'est-à-dire que chaque découpure transversale 90, 90' est agencée de sorte que chacune des faces d'attaque Ft1 et de fuite Ft2 est reliée par un chanfrein Cf respectivement à chacun des bords d'attaque 901 et de fuite 902 de chaque découpure transversale 90, 90'. Chaque découpure transversale 90, 90' s'étend axialement depuis une extrémité axialement extérieure E1 jusqu'à une extrémité axialement intérieure E2 définissant une longueur curviligne totale TI de chaque découpure transversale 90, 90' ainsi qu'une longueur axiale La, La' de chaque découpure transversale 90, 90'.

Au sein des découpures transversales 90, 90' présentant une profondeur supérieure ou égale à 20% de la hauteur de sculpture Hs, on distingue quatre familles de découpures transversales 90 comprenant des découpures transversales 92, 94, 96, 98 ménagées dans la première portion axialement latérale P1 et trois familles de découpures transversales 90' comprenant des découpures transversales 92', 94', 96' ménagées dans la deuxième portion axialement latérale P2. Ces découpures présentent des largeurs différentes et sont disposées circonférentiellement de façon irrégulière de façon à éviter le sirenement et d'autre part de maintenir l'uniformité du pneumatique. Chaque largeur de chaque découpure transversale 90, 90' est inférieure ou égale à 2,0 mm, de préférence va de 0,5 mm à 2,0 mm. Ainsi, chaque découpure transversale 92, 94, 96, 98, 92', 94', 96' présente une largeur Lt2, Lt4, Lt6, Lt8, Lt2', Lt4', Lt6' telles que Lt2=Lt2'=1,2 mm, Lt4=Lt4'=Lt8=1,5 mm et Lt6=Lt6'=0,8 mm.

En référence aux figures 3, 7 et 8, la première portion axialement latérale P1 comprend des découpures transversales 92, 94, 96, 98 comprenant chacune une portion principale respectivement désignée par la référence 921, 941, 961, 981 et une portion complémentaire respectivement désignée par la référence 922, 942, 962, 982 les portions principale et complémentaire étant séparées l'une de l'autre par une discontinuité 923, 943, 963, 983 de la courbure de chaque face d'attaque Ft1 et de fuite Ft2. Chaque portion complémentaire 922, 942, 962, 982 est agencée axialement à l'extérieur de chaque portion principale 921, 941, 961, 981 et présente une largeur Ls2, Ls4, Ls6, Ls8 supérieure à la largeur Lp2, Lp4, Lp6, Lp8 de chaque portion principale 921, 941, 961, 981 qui est ici égale à chaque largeur Lt2, Lt4, Lt6, Lt8. Chaque portion principale 921, 941, 961, 981 s'étend sur une longueur curviligne principale Tp strictement supérieure à 50% de la longueur curviligne totale TI de chaque découpure transversale 92, 94, 96, 98. Chaque portion complémentaire 922, 942, 962, 982 s'étend sur une longueur curviligne complémentaire Tc strictement inférieure à 50% de la longueur curviligne totale TI de chaque découpure transversale 92, 94, 96, 98.

Chaque découpure transversale 92, 94, 96, 98 présente une longueur axiale La supérieure ou égale à 20%, de préférence à 30%, plus préférentiellement à 50% et encore plus préférentiellement à 75% de la largeur axiale L1 de la première portion axialement latérale P1. Ici, La=42 mm.

Les découpures transversales 90, ici constituées par les découpures transversales 92, 94, 96, 98, présentant une profondeur supérieure ou égale à 20% de la hauteur de sculpture Hs et une longueur axiale La supérieure ou égale à 20% de la largeur axiale de la première portion axialement latérale P1 sont au nombre de N=125 sur l'ensemble de la circonférence du pneumatique 10. Dans une variante du premier mode de réalisation, N=98.

Comme visible sur la figure 3, la deuxième portion axialement latérale P2 comprend les découpures transversales 92', 94', 96', chacune étant constituée par une portion principale dont la longueur curviligne est égale à la longueur curviligne de la découpure.

Chaque découpure transversale 92', 94', 96' présente une longueur axiale La' supérieure ou égale à 20%, de préférence à 30%, plus préférentiellement à 50% et encore plus préférentiellement à 75% de la largeur axiale L2 de la deuxième portion axialement latérale P2. Ici, La'=42 mm.

Les découpures transversales 90', ici constituées par les découpures transversales 92', 94', 96', présentant une profondeur supérieure ou égale à 20% de la hauteur de sculpture Hs et une longueur axiale La' supérieure ou égale à 20% de la largeur axiale de la deuxième portion axialement latérale P2 sont au nombre de N'=125 sur l'ensemble de la circonférence du pneumatique 10. Dans la variante décrite ci-dessus, N'=98.

Chaque découpure transversale 90, 90' de chaque première et deuxième portion axialement latérale P1, P2 est obturée au moins partiellement par un pont de jonction 100 des faces d'attaque Ft1 et de fuite Ft2, ce pont de jonction 100 formant l'extrémité axialement intérieure E2 de chaque découpure transversale 90, 90'. Chaque pont de jonction 100 est ici agencé de façon à obturer intégralement la communication entre chaque découpure transversale 90, 90' et chaque première et deuxième rainure circonférentielle principale 52, 54 lorsque la découpure transversale passe dans l'aire de contact du pneumatique avec un sol de roulage.

Ainsi, en référence à la figure 9, chaque première et deuxième portion axialement latérale P1, P2 comprend des premières portions axiales respectivement P11, P21 comprenant les N, N' découpures transversales 90, 90' et des deuxièmes portions axiales respectivement P12, P22 constituées les ponts de jonction 100. Chaque deuxième portion axiale P12, P22 est agencée axialement à l'intérieur de chaque première portion axiale P11, P21.

Chaque portion axiale P11, P21 présente une largeur axiale supérieure ou égale à 70%, de préférence à 80% et plus préférentiellement à 90% et ici égale à 91% de la largeur axiale de chaque portion axialement latérale P1, P2. Ici, chaque première portion axiale P11, P21 présente une largeur axiale égale à 30 mm. De façon complémentaire, chaque deuxième portion axiale P12, P22 présente une largeur axiale égale à 3 mm. Chaque portion axiale P11, P21 satisfait la seule condition III car π x OD / N ≤ 24 mm. En outre, π x OD / N ≥ 10 mm. En l'espèce π x OD / N=17 mm. Dans la variante décrite ci-dessus avec N=98, π x OD / N ≤ 24 mm et π x OD / N ≥ 10 mm et plus précisément π x OD / N=22 mm.

On notera que, dans le premier mode de réalisation, de façon à limiter les zones de transition, chaque nervure centrale 62, 64, 66 et chaque première et deuxième portion axialement latérale P1, P2 comprend une portion axiale respectivement P62, P64, P66, P11, P21 satisfaisant une seule des conditions I, II, III et présentant une largeur axiale supérieure ou égale à 70%, de préférence à 80% et plus préférentiellement à 90% de la largeur axiale de chaque nervure centrale 62, 64, 66 et de chaque première et deuxième portion axialement latérale P1, P2.

Le taux d'entaillement surfacique de la bande de roulement 14 va de 27% à 45%, de préférence de 30% à 40% et est ici égal à 36%. Le taux d'entaillement volumique de la bande de roulement 14 va de 17% à 35%, de préférence de 20% à 30% et est ici égal à 24%.

Le taux d'entaillement surfacique de chaque première et deuxième portion axialement latérale P1, P2 va de 20% à 30% et est ici égal à 25%. Le taux d'entaillement volumique de chaque première et deuxième portion axialement latérale P1, P2 va de 5% à 10% et est ici égal à 8%.

Le taux d'entaillement surfacique de la portion axialement centrale P0 va de 35% à 45% et est ici égal à 41%. Le taux d'entaillement volumique de la portion axialement centrale P0 va de 25% à 35% et est ici égal à 30%.

Le taux d'entaillement surfacique de chaque nervure centrale 62, 64, 66 va de 5% à 10% et est ici égal à 7%. Le taux d'entaillement volumique de chaque nervure centrale 62, 64, 66 va de 0,5% à 5%, de préférence va de 0,5% à 2% et est ici égal à 1%.

Le rapport du taux d'entaillement surfacique de chaque nervure centrale 62, 64, 66 sur le taux d'entaillement surfacique de chaque première et deuxième portion axialement latérale P1, P2 est inférieur ou égal à 0,35, de préférence inférieur ou égal à 0,30 et plus préférentiellement va de 0,10 à 0,30 et est ici égal à 0,28. Le rapport du taux d'entaillement volumique de chaque nervure centrale 62, 64, 66 sur le taux d'entaillement de chaque première et deuxième portion axialement latérale P1, P2 est inférieur ou égal à 0,20, de préférence inférieur ou égal à 0,15 et plus préférentiellement va de 0,10 à 0,15 et est ici égal à 0,13.

On va maintenant décrire un pneumatique selon un deuxième mode de réalisation de l'invention en référence à la figure 10. Les éléments analogues au premier mode de réalisation sont désignés par des références identiques.

A la différence du premier mode de réalisation, la nervure centrale 64 ne comprend pas de découpure circonférentielle présentant une profondeur strictement inférieure à 50% de la hauteur de sculpture. Ici, la nervure centrale ne comprend pas la découpure circonférentielle complémentaire 74.

En outre, la nervure centrale 64 comprend plusieurs portions axiales satisfaisant chacune une seule des conditions I, II, III. En l'espèce, la nervure centrale 64 comprend d'une part, une première portion axiale P641 présentant une largeur axiale égale à 50% de la largeur axiale Ln4 de la nervure centrale 64 et satisfaisant la seule condition III et, d'autre part, une deuxième portion axiale P642 présentant une largeur axiale égale à 50% de la largeur axiale Ln4 de la nervure centrale 64 et satisfaisant la seule condition I. Ainsi, la largeur axiale de l'ensemble des première et deuxième portions axiales P641 et P642 de la nervure centrale 64 satisfaisant chacune une seule des conditions I, II, III, est supérieure ou égale à 70%, de préférence à 80% et plus préférentiellement à 90% de la largeur axiale de la nervure centrale 64 et ici égale à 100% de la largeur axiale Ln4.

Plus précisément, la portion axiale P641 comprend des découpures transversales 91 présentant une profondeur Ht supérieure ou égale à 20% de la hauteur de sculpture Hs et une longueur axiale Lb supérieure ou égale à 20%, ici égale à 50%, de la largeur axiale de la nervure centrale 64. Les découpures 91 sont au nombre de N=125 sur l'ensemble de la circonférence du pneumatique. L'ensemble des N découpures transversales 91 est agencé de sorte que π x OD / N ≤ 24 mm de façon à satisfaire la seule condition III. Dans une variante de ce deuxième mode de réalisation, on a N=98, on a également π x OD / N ≤ 24 mm.

On notera que, à la différence du premier mode de réalisation, la nervure centrale 64 comprend une zone de transition entre les première et deuxième portions axiales P641 et P642 et des première et deuxième portions axiales P641 et P642 dont les largeurs axiales sont telles que la nervure centrale 64 ne comprend pas de portion axiale satisfaisant une seule des conditions I, II, III et présentant une largeur axiale supérieure ou égale à 70% de la largeur axiale de la nervure centrale 64.

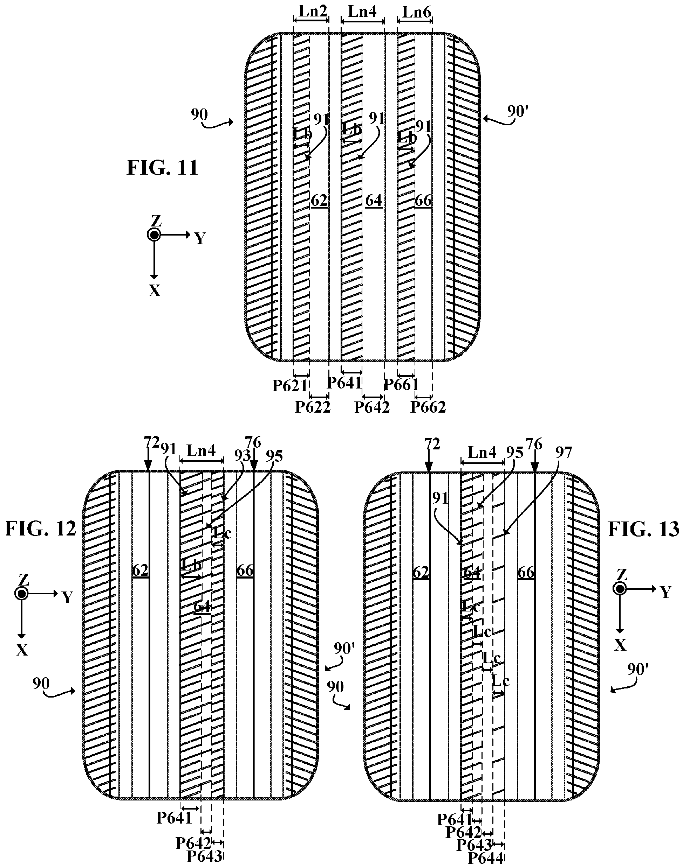

On va maintenant décrire un pneumatique selon un troisième mode de réalisation de l'invention en référence à la figure 11. Les éléments analogues aux modes de réalisation précédents sont désignés par des références identiques.

A la différence du premier mode de réalisation, chaque nervure centrale 62, 64, 66 ne comprend aucune découpure circonférentielle présentant une profondeur strictement inférieure à 50% de la hauteur de sculpture. Ici, chaque nervure centrale 62, 64, 66 ne comprend pas chaque découpure circonférentielle complémentaire 72, 74, 76.

En outre, de façon analogue au deuxième mode de réalisation, chaque nervure centrale 62, 64, 66 comprend plusieurs portions axiales satisfaisant chacune une seule des conditions I, II, III. En l'espèce, chaque nervure centrale 62, 64, 66 comprend d'une part, une première portion axiale P621, P641, P661 présentant une largeur axiale égale à 50% de chaque largeur axiale Ln2, Ln4, Ln6 de chaque nervure centrale 62, 64, 66 et satisfaisant la seule condition III et, d'autre part, une deuxième portion axiale P622, P642, P662 présentant une largeur axiale égale à 50% de chaque largeur axiale Ln2, Ln4, Ln6 de chaque nervure centrale 62, 64, 66 et satisfaisant la seule condition I. Ainsi, la largeur axiale de l'ensemble des première et deuxième portions axiales P621 et P622, P641 et P642, P661 et P662 de chaque nervure centrale 62, 64, 66 satisfaisant chacune une seule des conditions I, II, III, est supérieure ou égale à 70%, de préférence à 80% et plus préférentiellement à 90% de la largeur axiale de la nervure centrale 64 et ici égale à 100% de chaque largeur axiale Ln2, Ln4, Ln6.

On va maintenant décrire un pneumatique selon un quatrième mode de réalisation de l'invention en référence à la figure 12. Les éléments analogues aux modes de réalisation précédents sont désignés par des références identiques.

A la différence du premier mode de réalisation, la nervure centrale 64 ne comprend pas de découpure circonférentielle présentant une profondeur strictement inférieure à 50% de la hauteur de sculpture. Ici, la nervure centrale ne comprend pas la découpure circonférentielle complémentaire 74.

En outre, la nervure centrale 64 comprend plusieurs portions axiales P641, P643 satisfaisant chacune une seule des conditions I, II, III ainsi qu'une portion centrale P642 ne satisfaisant aucune des conditions I, II, III.

En l'espèce, d'une part, la portion axiale P641 présente une largeur axiale égale à 50% de la largeur axiale Ln4 de la nervure centrale 64 et satisfait la seule condition III et, d'autre part, la portion axiale P643 présente une largeur axiale égale à 25% de la largeur axiale Ln4 de la nervure centrale 64 et satisfait la seule condition III de sorte que la largeur axiale de l'ensemble des portions axiales P641 et P643 satisfaisant chacune une seule des conditions I, II, III, ici la condition III, est supérieure ou égale à 70% de la largeur axiale de la nervure centrale 64 et ici égale à 75% de la largeur axiale Ln4.

En outre, contrairement aux deuxième et troisième modes de réalisation, même si la nervure centrale 64 comprend plusieurs portions axiales P641, P643 satisfaisant chacune une seule des conditions I, II, III, l'ensemble des portions axiales P641, P643 du quatrième mode de réalisation satisfait une seule des conditions I, II, III, ici la seule condition III.

On notera également que, contrairement au premier mode de réalisation, la nervure centrale 64 comprend deux zones de transition entre les différentes portions axiales P641, P642, et P643 et des portions axiales P641, P642, et P643 dont les largeurs axiales sont telles que la nervure centrale 64 ne comprend pas de portion axiale satisfaisant une seule des conditions I, II, III et présentant une largeur axiale supérieure ou égale à 70% de la largeur axiale de la nervure centrale 64.

Plus précisément, chaque portion axiale P641, P643 comprend respectivement des découpures transversales 91, 93 présentant une profondeur Ht supérieure ou égale à 20% de la hauteur de sculpture Hs et une longueur axiale Lb, Lc supérieure ou égale à 20%, ici respectivement égale à 50% et 25%, de la largeur axiale de la nervure centrale 64. Les découpures 91, 93 sont respectivement au nombre de N1=N3=125 sur l'ensemble de la circonférence du pneumatique. L'ensemble des N1 découpures transversales 91 et l'ensemble des N3 découpures transversales 93 sont agencés de sorte que π x OD / N1 ≤ 24 mm et π x OD / N3 ≤ 24 mm de façon à satisfaire la seule condition III. Dans une variante de ce quatrième mode de réalisation, on aura N1=N3=98 de sorte que l'on a également π x OD / N1 ≤ 24 mm et π x OD / N3 ≤ 24 mm de façon à satisfaire la seule condition III

La portion axiale P642 ne satisfait aucune des conditions I, II, III. En effet, bien que la portion axiale P642 comprenne N2 découpures transversales 95 sur l'ensemble de la circonférence du pneumatique de la figure 12, ces N2=65 découpures transversale 95 présentant une profondeur Ht supérieure ou égale à 20% de la hauteur de sculpture Hs et une longueur axiale supérieure ou égale à 20%, ici égale à 25%, de la largeur axiale Ln4 de la nervure centrale 64, l'ensemble des N découpures transversales 95 est agencé de sorte que 24 mm < π x OD / N2 < 40 mm.

On va maintenant décrire un pneumatique selon un cinquième mode de réalisation de l'invention en référence à la figure 13. Les éléments analogues aux modes de réalisation précédents sont désignés par des références identiques.

A la différence du quatrième mode de réalisation, la nervure centrale 64 comprend plusieurs portions axiales P641, P643, P644 satisfaisant chacune une seule des conditions I, II, III ainsi qu'une portion centrale P642 ne satisfaisant aucune des conditions I, II, III.

En l'espèce, d'une part, la portion axiale P641 présente une largeur axiale égale à 25% de la largeur axiale Ln4 de la nervure centrale 64 et satisfait la seule condition III, d'autre part, la portion axiale P643 présente une largeur axiale égale à 25% de la largeur axiale Ln4 de la nervure centrale 64 et satisfait la seule condition I et enfin la portion axiale P644 présente une largeur axiale égale à 25% de la largeur axiale Ln4 de la nervure centrale 64 et satisfait la seule condition II de sorte que la largeur axiale de l'ensemble des portions axiales P641, P643 et P644 satisfaisant chacune une seule des conditions I, II, III, ici les conditions I, II et III, est supérieure ou égale à 70% de la largeur axiale de la nervure centrale 64 et ici égale à 75% de la largeur axiale Ln4.

Plus précisément, la portion axiale P641 comprend des découpures transversales 91 présentant une profondeur Ht supérieure ou égale à 20% de la hauteur de sculpture Hs et une longueur axiale Lc supérieure ou égale à 20%, ici égale à 25%, de la largeur axiale de la nervure centrale 64. Les découpures 91 sont au nombre de N1=125 sur l'ensemble de la circonférence du pneumatique. L'ensemble des N1 découpures transversales 91 est agencé de sorte que π x OD / N1 ≤ 24 mm de façon à satisfaire la seule condition III. Dans une variante de ce cinquième mode de réalisation, N1=98 de sorte que π x OD / N1 ≤ 24 mm de façon à satisfaire la seule condition III.

De façon analogue au quatrième mode de réalisation, la portion axiale P642 ne satisfait aucune des conditions I, II, III.

La portion axiale P644 comprend des découpures transversales 97 présentant une profondeur Ht supérieure ou égale à 20% de la hauteur de sculpture Hs et une longueur axiale Lc supérieure ou égale à 20%, ici égale à 25%, de la largeur axiale de la nervure centrale 64. Ces découpures 97 sont au nombre de N4=25 sur l'ensemble de la circonférence du pneumatique. L'ensemble des N4 découpures transversales 97 de la portion axiale P644 est agencé de sorte que π x OD / N4 ≥ 40 mm, de préférence de sorte que π x OD / N4 ≥ 60 mm et encore plus préférentiellement de sorte que π x OD / N4 ≥ 80 mm.

On notera que, contrairement au premier mode de réalisation, la nervure centrale 64 comprend trois zones de transition entre les différentes portions axiales P641, P642, P643 et P644 et des portions axiales P641, P642, P643 et P644 dont les largeurs axiales sont telles que la nervure centrale 64 ne comprend pas de portion axiale satisfaisant une seule des conditions I, II, III et présentant une largeur axiale supérieure ou égale à 70% de la largeur axiale de la nervure centrale 64.

### TESTS COMPARATIFS

On a testé le pneumatique 10 selon le premier mode de réalisation de l'invention ainsi qu'un pneumatique témoin W non conforme à l'invention dans lequel, à la différence du pneumatique 10 selon le premier mode de réalisation, chaque portion axiale P62, P64, P66 comprend des découpures transversales présentant une profondeur supérieure ou égale à 20% de la hauteur de sculpture Hs et une longueur axiale supérieure ou égale à 20% de la largeur axiale Ln2, Ln4 et Ln6 de chaque nervure centrale 62, 64, 66 de sorte que chacune de ces portions axiales P62, P64, P66 satisfait la condition III.

Lors de ces tests, on a équipé un véhicule de quatre pneumatiques identiques 10 ou W gonflés à 2,5 bars et soumis à une charge égale à 470 daN et on a mesuré le bruit généré par les pneumatiques testés conformément au règlement UNECE 51-03.

Dans un premier test, on a mesuré le bruit extérieur généré par les pneumatiques testés à vitesse constante, c'est-à-dire à accélération nulle. Dans un deuxième test, on a mesuré le bruit extérieur généré par les pneumatiques testés en phase d'accélération avec une accélération égale à 3 m.s⁻². Les résultats sont rassemblés dans le tableau 1 ci-dessous. Dans ce tableau, le bruit généré par les pneumatiques W à vitesse constante est noté R et celui généré en phase d'accélération est noté R'.

**Tableau 1**

| Pneumatique testé | Vitesse constante | Phase d'accélération |
|---|---|---|
| W | R | R' |
| 10 | R-0,4 dB | R'-3,5 dB |

On note que le pneumatique 10 selon l'invention permet de réduire significativement le bruit extérieur généré par le pneumatique que ce soit à vitesse constante ou en phase d'accélération.

L'invention ne se limite pas au mode de réalisation décrit précédemment.

En effet, on pourra envisager, sans sortir du cadre de l'invention, une portion axialement centrale comprenant des première, deuxième et troisième rainures circonférentielles principales et des première et deuxième nervures centrales agencées de sorte que :
- la première nervure centrale est axialement comprise entre la première rainure circonférentielle principale et la troisième rainure circonférentielle principale,
- la deuxième nervure centrale est axialement comprise entre la deuxième rainure circonférentielle principale et la troisième rainure circonférentielle principale.

## Revendications

1. Pneumatique (10) pour véhicule de tourisme présentant un diamètre extérieur OD et comprenant une bande de roulement (14) destinée à entrer en contact avec le sol lors d'un roulage du pneumatique (10) par l'intermédiaire d'une surface de roulement (38) délimitée axialement par des premier et deuxième bords axiaux (41, 42) de la surface de roulement (38), la bande de roulement (14) comprenant :
- une portion axialement centrale (P0) comprenant des rainures circonférentielles principales (52, 54, 56, 58) présentant une profondeur (Hr) supérieure ou égale à 50% de la hauteur de sculpture (Hs) comprenant au moins des première et deuxième rainures circonférentielles principales (52, 54) agencées axialement de part et d'autre du plan médian (M) du pneumatique (10), les première et deuxième rainures circonférentielles principales (52, 54) étant les rainures circonférentielles principales axialement les plus extérieures de la bande de roulement (14), la portion axialement centrale (P0) s'étendant axialement depuis un bord axialement extérieur (521) de la première rainure circonférentielle principale (52) jusqu'à un bord axialement extérieur (541) de la deuxième rainure circonférentielle principale (54), la portion axialement centrale (P0) comprenant au moins une nervure centrale (62, 64, 66), la ou chaque nervure centrale (62, 64, 66) étant délimitée axialement par deux rainures circonférentielles principales (52, 54, 56, 58) présentant une profondeur (Hr) supérieure ou égale à 50% de la hauteur de sculpture (Hs),
- des première et deuxième portions axialement latérales (P1, P2) agencées axialement à l'extérieur de la portion axialement centrale (P0) de part et d'autre axialement de la portion axialement centrale (P0) par rapport au plan médian (M) du pneumatique (10) et agencées de sorte que :
- la première portion axialement latérale (P1) s'étend axialement depuis le premier bord axial (41) de la surface de roulement (38) jusqu'au bord axialement extérieur (521) de la première rainure circonférentielle principale (52),
- la deuxième portion axialement latérale (P2) s'étend axialement depuis le deuxième bord axial (42) de la surface de roulement (38) jusqu'au bord axialement extérieur (541) de la deuxième rainure circonférentielle principale (54),
**caractérisé en ce que** la ou chaque nervure centrale (62, 64, 66) et chaque première et deuxième portion axialement latérale (P1, P2) comprend au moins une portion axiale (P62, P64, P66, P11, P21, P641, P642, P643, P644, P622, P662) satisfaisant une seule des conditions I, II, III suivantes, la largeur axiale de l'ensemble de la ou des portions axiales de la ou chaque nervure centrale (62, 64, 66) et de chaque première et deuxième portion axialement latérale (P1, P2) satisfaisant chacune une seule des conditions I, II, III étant supérieure ou égale à 70% de la largeur axiale (Ln2, Ln4, Ln6, L1, L2) de la ou chaque nervure centrale (62, 64, 66) et de chaque première et deuxième portion axialement latérale (P1, P2):
I - la portion axiale (P62, P64, P66, P642, P643, P622, P662) ne comprend aucune découpure transversale (90, 90') présentant une profondeur (Ht) supérieure ou égale à 20% de la hauteur de sculpture (Hs) et une longueur axiale (La, Lb, Lc) supérieure ou égale à 20% de la largeur axiale (Ln2, Ln4, Ln6, L1, L2) de la nervure centrale (62, 64, 66) ou de la portion axialement latérale (P1, P2), la portion axiale comprenant éventuellement au moins une découpure circonférentielle (72, 74, 76, 82, 84) présentant une profondeur (Hc2, Hc4, Hc6, HI2, HI4) strictement inférieure à 50% de la hauteur de sculpture (Hs),
Il - la portion axiale (P644) comprend des découpures transversales (90, 90') présentant une profondeur (Ht) supérieure ou égale à 20% de la hauteur de sculpture (Hs) et une longueur axiale (La, Lb, Lc) supérieure ou égale à 20% de la largeur axiale de la nervure centrale (62, 64, 66) ou de la portion axialement latérale (P1, P2), l'ensemble des N découpures transversales (90, 90') de la portion axiale présentant une profondeur (Ht) supérieure ou égale à 20% de la hauteur de sculpture (Hs) et une longueur axiale (La, Lb, Lc) supérieure ou égale à 20% de la largeur axiale (Ln2, Ln4, Ln6, L1, L2) de la nervure centrale (62, 64, 66) ou de la portion axialement latérale (P1, P2) étant agencé de sorte que π x OD / N ≥ 40 mm, la portion axiale comprenant éventuellement au moins une découpure circonférentielle (72, 74, 76, 82, 84) présentant une profondeur (Hc2, Hc4, Hc6, HI2, HI4) strictement inférieure à 50% de la hauteur de sculpture (Hs),
III - la portion axiale (P11, P21, P621, P641, P661, P643) comprend des découpures transversales (90, 90') présentant une profondeur (Ht) supérieure ou égale à 20% de la hauteur de sculpture (Hs) et une longueur axiale (La, Lb, Lc) supérieure ou égale à 20% de la largeur axiale (Ln2, Ln4, Ln6, L1, L2) de la nervure centrale (62, 64, 66) ou de la portion axialement latérale (P1, P2), l'ensemble des N découpures transversales (90, 90') de la nervure centrale (62, 64, 66) ou de la portion axiale présentant une profondeur (Ht) supérieure ou égale à 20% de la hauteur de sculpture (Hs) et une longueur axiale (La, Lb, Lc) supérieure ou égale à 20% de la largeur axiale (Ln2, Ln4, Ln6, L1, L2) de la nervure centrale (62, 64, 66) ou de la portion axialement latérale (P1, P2) étant agencé de sorte que π x OD / N ≤ 24 mm, la portion axiale comprenant éventuellement au moins une découpure circonférentielle (72, 74, 76, 82, 84) présentant une profondeur (Hc2, Hc4, Hc6, HI2, HI4) strictement inférieure à 50% de la hauteur de sculpture (Hs),
la condition I ou II étant satisfaite au moins par une des portions axiales de la ou d'une des nervures centrales (62, 64, 66) ou par une des portions axiales de la première portion axialement latérale (P1) ou par une des portions axiales de la deuxième portion axialement latérale (P2),
la condition III étant satisfaite au moins par une des portions axiales de la ou d'une des nervures centrales (62, 64, 66) ou par une des portions axiales de la première portion axialement latérale (P1) ou par une des portions axiales de la deuxième portion axialement latérale (P2).

2. Pneumatique (10) selon la revendication précédente, dans lequel au moins une des portions axiales de la ou chaque nervure centrale (62, 64, 66) satisfait la condition I ou II et au moins une des portion axiales de chaque première et deuxième portion axialement latérale (P0, P1) satisfait la condition III, de préférence au moins une des portions axiales de la ou chaque nervure centrale (62, 64, 66) satisfait la condition I et au moins une des portions axiales de chaque première et deuxième portion axialement latérale (P1, P2) satisfait la condition III.

3. Pneumatique (10) selon l'une quelconque des revendications précédentes, dans lequel l'ensemble des N découpures transversales (90, 90') de la ou de chaque nervure centrale (62, 64, 66) ou de la ou de chaque portion axialement latérale (P0, P1) présentant une profondeur supérieure ou égale à 20% de la hauteur de sculpture (Hs) et une longueur axiale (La, Lb, Lc) supérieure ou égale à 20% de la largeur axiale (L1, L2, Ln1, Ln4, Ln6) de la ou chaque nervure centrale (62, 64, 66) ou de la ou de chaque portion axialement latérale (P1, P2) et satisfaisant la condition III est agencé de sorte que π x OD / N ≥ 10 mm, de préférence π x OD / N ≥ 15 mm.

4. Pneumatique (10) selon l'une quelconque des revendications précédentes, dans lequel la largeur axiale de l'ensemble de la ou des portions axiales de la ou chaque nervure centrale (62, 64, 66) et de chaque première et deuxième portion axialement latérale (P1, P2) satisfaisant chacune une seule des conditions I, II, III est supérieure ou égale à 80%, de préférence à 90% de la largeur axiale (Ln2, Ln4, Ln6, L1, L2) de la ou de chaque nervure centrale (62, 64, 66) et de chaque première et deuxième portion axialement latérale (P1, P2).

5. Pneumatique (10) selon l'une quelconque des revendications précédentes, dans lequel, la ou chaque nervure centrale (62, 64, 66) ou la première portion axialement latérale (P1) ou la deuxième portion axialement latérale (P2) comprenant plusieurs portions axiales satisfaisant chacune une seule des conditions I, II, III, l'ensemble des portions axiales de la ou chaque nervure centrale (62, 64, 66) ou de la première portion axialement latérale (P1) ou de la deuxième portion axialement latérale (P2) satisfait une seule des conditions I, II, III.

6. Pneumatique (10) selon l'une quelconque des revendications précédentes, dans lequel la ou chaque nervure centrale (62, 64, 66) et chaque première et deuxième portion axialement latérale (P1, P2) comprend une portion axiale satisfaisant une seule des conditions I, II, III et présentant une largeur axiale supérieure ou égale à 70%, de préférence à 80% et plus préférentiellement à 90% de la largeur axiale de la ou chaque nervure centrale (62, 64, 66) et de chaque première et deuxième portion axialement latérale (P1, P2).

7. Pneumatique (10) selon l'une quelconque des revendications précédentes, dans lequel le rapport de la largeur axiale (L0) de la portion centrale (P0) sur la largeur axiale (L1, L2) de chaque première et deuxième portion axialement latérale (P1, P2) est supérieur ou égale à 3,0, de préférence va de 3,0 à 5,0 et plus préférentiellement va de 4,0 à 4,5.

8. Pneumatique (10) selon l'une quelconque des revendications précédentes, dans lequel, chaque première et deuxième portion axialement latérale (P1, P2) comprenant des découpures transversales (90, 90') s'étendant axialement depuis une extrémité axialement extérieure (E1) jusqu'à une extrémité axialement intérieure (E2), au moins 50%, de préférence au moins 75% et encore plus préférentiellement chacune des découpures transversales (90, 90') de chaque première et deuxième portion axialement latérale (P1, P2) est obturée au moins partiellement par un pont de jonction (100) des faces d'attaque (Ft1) et de fuite (Ft2) formant l'extrémité axialement intérieure (E2) de la découpure transversale (90, 90').

9. Pneumatique (10) selon l'une quelconque des revendications précédentes, dans lequel le taux d'entaillement surfacique de chaque première et deuxième portion axialement latérale (P1, P2) va de 20% à 30%.

10. Pneumatique (10) selon l'une quelconque des revendications précédentes, dans lequel le taux d'entaillement volumique de chaque première et deuxième portion axialement latérale (P1, P2) va de 5% à 10%.

11. Pneumatique (10) selon l'une quelconque des revendications précédentes, dans lequel le taux d'entaillement surfacique de la ou chaque nervure centrale (62, 64, 66) va de 5% à 10%.

12. Pneumatique (10) selon l'une quelconque des revendications précédentes, dans lequel le taux d'entaillement volumique de la ou chaque nervure centrale (62, 64, 66) va de 0,5% à 5%, de préférence va de 0,5% à 2%.

13. Pneumatique (10) selon l'une quelconque des revendications précédentes, dans lequel la portion axialement centrale (P0) comprend au moins une troisième rainure circonférentielle (56) principale et au moins des première et deuxième nervures centrales (62, 64, 66) agencées de sorte que :
- la première nervure centrale (62) est axialement comprise entre la première rainure circonférentielle principale (52) et la troisième rainure circonférentielle principale (56),
- la deuxième nervure centrale (64) est axialement comprise entre la deuxième rainure circonférentielle principale (54) et la troisième rainure circonférentielle principale (56).

14. Pneumatique (10) selon l'une quelconque des revendications précédentes, dans lequel la portion axialement centrale (P0) comprend des troisième et quatrième rainures circonférentielles principales (56, 58) et au moins des première, deuxième et troisième nervures centrales (62, 64, 66) agencées de sorte que :
- la première nervure centrale (62) est axialement comprise entre la première rainure circonférentielle principale (52) et la troisième rainure circonférentielle principale (56),
- la deuxième nervure centrale (64) est axialement comprise entre la troisième rainure circonférentielle principale (56) et la quatrième rainure circonférentielle principale (58), et
- la troisième nervure centrale (66) est axialement comprise entre la quatrième rainure circonférentielle principale (58) et la deuxième rainure circonférentielle principale (54).

15. Pneumatique (10) selon l'une quelconque des revendications précédentes, dans lequel la ou au moins une des nervures centrales (62, 64, 66), de préférence chaque nervure centrale (62, 64, 66) comprend au moins une découpure circonférentielle complémentaire (72, 74, 76), la ou chaque découpure circonférentielle complémentaire (72, 74, 76):
- étant agencée axialement entre les deux rainures circonférentielles (52, 54, 56, 58) entre lesquelles est compris la ou chaque nervure centrale (62, 64, 66), et
- présentant une profondeur (Hc) strictement inférieure à 50%, de la hauteur de sculpture (Hs), de préférence inférieure ou égale à 30% de la hauteur de sculpture (Hs) et plus préférentiellement allant de 10% à 30% de la hauteur de sculpture (Hs).

## Patentansprüche

1. Reifen (10) für einen Personenkraftwagen, welcher einen Außendurchmesser OD aufweist und einen Laufstreifen (14) umfasst, der dazu bestimmt ist, während eines Rollens des Reifens (10) mit dem Boden über eine Lauffläche (38) in Kontakt zu kommen, die axial von einem ersten und einem zweiten axialen Rand (41, 42) der Lauffläche (38) begrenzt wird, wobei der Laufstreifen (14) umfasst:
- einen axial mittleren Abschnitt (P0), der Hauptumfangsrillen (52, 54, 56, 58) umfasst, die eine Tiefe (Hr) aufweisen, die größer oder gleich 50 % der Profiltiefe (Hs) ist, und die mindestens eine erste und eine zweite Hauptumfangsrille (52, 54) umfassen, die axial beiderseits der Mittelebene (M) des Reifens (10) angeordnet sind, wobei die erste und die zweite Hauptumfangsrille (52, 54) die axial äußersten Hauptumfangsrillen des Laufstreifens (14) sind, wobei sich der axial mittlere Abschnitt (P0) axial von einem axial äußeren Rand (521) der ersten Hauptumfangsrille (52) bis zu einem axial äußeren Rand (541) der zweiten Hauptumfangsrille (54) erstreckt, wobei der axial mittlere Abschnitt (P0) mindestens eine Mittelrippe (62, 64, 66) umfasst, wobei die oder jede Mittelrippe (62, 64, 66) axial von zwei Hauptumfangsrillen (52, 54, 56, 58) begrenzt wird, die eine Tiefe (Hr) aufweisen, die größer oder gleich 50 % der Profiltiefe (Hs) ist,
- einen ersten und einen zweiten axial seitlichen Abschnitt (P1, P2), die axial außerhalb des axial mittleren Abschnitts (P0) axial beiderseits des axial mittleren Abschnitts (P0) bezüglich der Mittelebene (M) des Reifens (10) angeordnet sind und derart angeordnet sind, dass:
- der erste axial seitliche Abschnitt (P1) sich axial vom ersten axialen Rand (41) der Lauffläche (38) bis zum axial äußeren Rand (521) der ersten Hauptumfangsrille (52) erstreckt,
- der zweite axial seitliche Abschnitt (P2) sich axial vom zweiten axialen Rand (42) der Lauffläche (38) bis zum axial äußeren Rand (541) der zweiten Hauptumfangsrille (54) erstreckt,
**dadurch gekennzeichnet, dass** die oder jede Mittelrippe (62, 64, 66) und jeder erste und zweite axial seitliche Abschnitt (P1, P2) mindestens einen axialen Abschnitt (P62, P64, P66, P11, P21, P641, P642, P643, P644, P622, P662) umfasst, der eine einzige der folgenden Bedingungen I, II, III erfüllt, wobei die axiale Breite der Gesamtheit des oder der axialen Abschnitte der oder jeder Mittelrippe (62, 64, 66) und jedes ersten und zweiten axial seitlichen Abschnitts (P1, P2), die jeweils eine einzige der Bedingungen I, II, III erfüllen, größer oder gleich 70 % der axialen Breite (Ln2, Ln4, Ln6, L1, L2) der oder jeder Mittelrippe (62, 64, 66) und jedes ersten und zweiten axial seitlichen Abschnitts (P1, P2) ist:
I - der axiale Abschnitt (P62, P64, P66, P642, P643, P622, P662) umfasst keinen quer ausgerichteten Ausschnitt (90, 90'), der eine Tiefe (Ht), die größer oder gleich 20 % der Profiltiefe (Hs) ist, und eine axiale Länge (La, Lb, Lc), die größer oder gleich 20 % der axialen Breite (Ln2, Ln4, Ln6, L1, L2) der Mittelrippe (62, 64, 66) oder des axial seitlichen Abschnitts (P1, P2) ist, aufweist, wobei der axiale Abschnitt eventuell mindestens einen Umfangsausschnitt (72, 74, 76, 82, 84) umfasst, der eine Tiefe (Hc2, Hc4, Hc6, Hl2, Hl4) aufweist, die streng kleiner als 50 % der Profiltiefe (Hs) ist,
II - der axiale Abschnitt (P644) umfasst quer ausgerichtete Ausschnitte (90, 90'), die eine Tiefe (Ht), die größer oder gleich 20 % der Profiltiefe (Hs) ist, und eine axiale Länge (La, Lb, Lc), die größer oder gleich 20 % der axialen Breite der Mittelrippe (62, 64, 66) oder des axial seitlichen Abschnitts (P1, P2) ist, aufweisen, wobei die Gesamtheit der N quer ausgerichteten Ausschnitte (90, 90') des axialen Abschnitts, die eine Tiefe (Ht), die größer oder gleich 20 % der Profiltiefe (Hs) ist, und eine axiale Länge (La, Lb, Lc), die größer oder gleich 20 % der axialen Breite (Ln2, Ln4, Ln6, L1, L2) der Mittelrippe (62, 64, 66) oder des axial seitlichen Abschnitts (P1, P2) ist, aufweisen, so ausgebildet ist, dass π x OD / N ≥ 40 mm ist, wobei der axiale Abschnitt eventuell mindestens einen Umfangsausschnitt (72, 74, 76, 82, 84) umfasst, der eine Tiefe (Hc2, Hc4, Hc6, Hl2, Hl4) aufweist, die streng kleiner als 50 % der Profiltiefe (Hs) ist,
III - der axiale Abschnitt (P11, P21, P621, P641, P661, P643) umfasst quer ausgerichtete Ausschnitte (90, 90'), die eine Tiefe (Ht), die größer oder gleich 20 % der Profiltiefe (Hs) ist, und eine axiale Länge (La, Lb, Lc), die größer oder gleich 20 % der axialen Breite (Ln2, Ln4, Ln6, L1, L2) der Mittelrippe (62, 64, 66) oder des axial seitlichen Abschnitts (P1, P2) ist, aufweisen, wobei die Gesamtheit der N quer ausgerichteten Ausschnitte (90, 90') der Mittelrippe (62, 64, 66) oder des axialen Abschnitts, die eine Tiefe (Ht), die größer oder gleich 20 % der Profiltiefe (Hs) ist, und eine axiale Länge (La, Lb, Lc), die größer oder gleich 20 % der axialen Breite (Ln2, Ln4, Ln6, L1, L2) der Mittelrippe (62, 64, 66) oder des axial seitlichen Abschnitts (P1, P2) ist, aufweisen, so ausgebildet ist, dass π x OD / N ≤ 24 mm ist, wobei der axiale Abschnitt eventuell mindestens einen Umfangsausschnitt (72, 74, 76, 82, 84) umfasst, der eine Tiefe (Hc2, Hc4, Hc6, Hl2, Hl4) aufweist, die streng kleiner als 50 % der Profiltiefe (Hs) ist,
wobei die Bedingung I oder II mindestens von einem der axialen Abschnitte der oder einer der Mittelrippen (62, 64, 66) oder von einem der axialen Abschnitte des ersten axial seitlichen Abschnitts (P1) oder von einem der axialen Abschnitte des zweiten axial seitlichen Abschnitts (P2) erfüllt wird,
wobei die Bedingung III mindestens von einem der axialen Abschnitte der oder einer der Mittelrippen (62, 64, 66) oder von einem der axialen Abschnitte des ersten axial seitlichen Abschnitts (P1) oder von einem der axialen Abschnitte des zweiten axial seitlichen Abschnitts (P2) erfüllt wird.

2. Reifen (10) nach dem vorhergehenden Anspruch, wobei mindestens einer der axialen Abschnitte der oder jeder Mittelrippe (62, 64, 66) die Bedingung I oder II erfüllt und mindestens einer der axialen Abschnitte jedes ersten und zweiten axial seitlichen Abschnitts (P0, P1) die Bedingung III erfüllt, vorzugsweise mindestens einer der axialen Abschnitte der oder jeder Mittelrippe (62, 64, 66) die Bedingung I erfüllt und mindestens einer der axialen Abschnitte jedes ersten und zweiten axial seitlichen Abschnitts (P1, P2) die Bedingung III erfüllt.

3. Reifen (10) nach einem der vorhergehenden Ansprüche, wobei die Gesamtheit der N quer ausgerichteten Ausschnitte (90, 90') der oder jeder Mittelrippe (62, 64, 66) oder des oder jedes axial seitlichen Abschnitts (P0, P1), die eine Tiefe, die größer oder gleich 20 % der Profiltiefe (Hs) ist, und eine axiale Länge (La, Lb, Lc), die größer oder gleich 20 % der axialen Breite (L1, L2, Ln1, Ln4, Ln6) der oder jeder Mittelrippe (62, 64, 66) oder des oder jedes axial seitlichen Abschnitts (P1, P2) ist, aufweisen und die Bedingung III erfüllen, so ausgebildet ist, dass π x OD / N ≥ 10 mm, vorzugsweise π x OD / N ≥ 15 mm ist.

4. Reifen (10) nach einem der vorhergehenden Ansprüche, wobei die axiale Breite der Gesamtheit des oder der axialen Abschnitte der oder jeder Mittelrippe (62, 64, 66) und jedes ersten und zweiten axial seitlichen Abschnitts (P1, P2), die jeweils eine einzige der Bedingungen I, II, III erfüllen, größer oder gleich 80 %, vorzugsweise größer oder gleich 90 % der axialen Breite (Ln2, Ln4, Ln6, L1, L2) der oder jeder Mittelrippe (62, 64, 66) und jedes ersten und zweiten axial seitlichen Abschnitts (P1, P2) ist.

5. Reifen (10) nach einem der vorhergehenden Ansprüche, wobei, wenn die oder jede Mittelrippe (62, 64, 66) oder der erste axial seitliche Abschnitt (P1) oder der zweite axial seitliche Abschnitt (P2) mehrere axiale Abschnitte umfasst, die jeweils eine einzige der Bedingungen I, II, III erfüllen, die Gesamtheit der axialen Abschnitte der oder jeder Mittelrippe (62, 64, 66) oder des ersten axial seitlichen Abschnitts (P1) oder des zweiten axial seitlichen Abschnitts (P2) eine einzige der Bedingungen I, II, III erfüllt.

6. Reifen (10) nach einem der vorhergehenden Ansprüche, wobei die oder jede Mittelrippe (62, 64, 66) und jeder erste und zweite axial seitliche Abschnitt (P1, P2) einen axialen Abschnitt umfasst, der eine einzige der Bedingungen I, II, III erfüllt und eine axiale Breite aufweist, die größer oder gleich 70 %, vorzugsweise als 80 % und stärker bevorzugt als 90 % der axialen Breite der oder jeder Mittelrippe (62, 64, 66) und jedes ersten und zweiten axial seitlichen Abschnitts (P1, P2) ist.

7. Reifen (10) nach einem der vorhergehenden Ansprüche, wobei das Verhältnis der axialen Breite (L0) des mittleren Abschnitts (P0) zur axialen Breite (L1, L2) jedes ersten und zweiten axial seitlichen Abschnitts (P1, P2) größer oder gleich 3,0 ist, vorzugsweise 3,0 bis 5,0 beträgt und stärker bevorzugt 4,0 bis 4,5 beträgt.

8. Reifen (10) nach einem der vorhergehenden Ansprüche, wobei, wenn jeder erste und zweite axial seitliche Abschnitt (P1, P2) quer ausgerichtete Ausschnitte (90, 90') umfasst, die sich axial von einem axial äußeren Ende (E1) bis zu einem axial inneren Ende (E2) erstrecken, mindestens 50 %, vorzugsweise mindestens 75 % und noch stärker bevorzugt jeder der quer ausgerichteten Ausschnitte (90, 90') jedes ersten und zweiten axial seitlichen Abschnitts (P1, P2) wenigstens teilweise durch einen Verbindungssteg (100) der vorderen (Ft1) und hinteren Fläche (Ft2) verschlossen ist, der das axial innere Ende (E2) des quer ausgerichteten Ausschnitts (90, 90') bildet.

9. Reifen (10) nach einem der vorhergehenden Ansprüche, wobei der flächenbezogene Negativprofilanteil jedes ersten und zweiten axial seitlichen Abschnitts (P1, P2) 20 % bis 30 % beträgt.

10. Reifen (10) nach einem der vorhergehenden Ansprüche, wobei der volumenbezogene Negativprofilanteil jedes ersten und zweiten axial seitlichen Abschnitts (P1, P2) 5 % bis 10 % beträgt.

11. Reifen (10) nach einem der vorhergehenden Ansprüche, wobei der flächenbezogene Negativprofilanteil der oder jeder Mittelrippe (62, 64, 66) 5 % bis 10 % beträgt.

12. Reifen (10) nach einem der vorhergehenden Ansprüche, wobei der volumenbezogene Negativprofilanteil der oder jeder Mittelrippe (62, 64, 66) 0,5 % bis 5 % beträgt, vorzugsweise 0,5 % bis 2 % beträgt.

13. Reifen (10) nach einem der vorhergehenden Ansprüche, wobei der axial mittlere Abschnitt (P0) mindestens eine dritte Hauptumfangsrille (56) und mindestens eine erste und eine zweite Mittelrippe (62, 64, 66) umfasst, die derart angeordnet sind, dass:
- die erste Mittelrippe (62) sich axial zwischen der ersten Hauptumfangsrille (52) und der dritten Hauptumfangsrille (56) befindet,
- die zweite Mittelrippe (64) sich axial zwischen der zweiten Hauptumfangsrille (54) und der dritten Hauptumfangsrille (56) befindet.

14. Reifen (10) nach einem der vorhergehenden Ansprüche, wobei der axial mittlere Abschnitt (P0) eine dritte und eine vierte Hauptumfangsrille (56, 58) und mindestens eine erste, zweite und dritte Mittelrippe (62, 64, 66) umfasst, die derart angeordnet sind, dass:
- die erste Mittelrippe (62) sich axial zwischen der ersten Hauptumfangsrille (52) und der dritten Hauptumfangsrille (56) befindet,
- die zweite Mittelrippe (64) sich axial zwischen der dritten Hauptumfangsrille (56) und der vierten Hauptumfangsrille (58) befindet und
- die dritte Mittelrippe (66) sich axial zwischen der vierten Hauptumfangsrille (58) und der zweiten Hauptumfangsrille (54) befindet.

15. Reifen (10) nach einem der vorhergehenden Ansprüche, wobei die oder mindestens eine der Mittelrippen (62, 64, 66), vorzugsweise jede Mittelrippe (62, 64, 66), mindestens einen komplementären Umfangsausschnitt (72, 74, 76) umfasst, wobei der oder jeder komplementäre Umfangsausschnitt (72, 74, 76):
- axial zwischen den zwei Umfangsrillen (52, 54, 56, 58) angeordnet ist, zwischen denen sich die oder jede Mittelrippe (62, 64, 66) befindet, und
- eine Tiefe (Hc) aufweist, die streng kleiner als 50 % der Profiltiefe (Hs), vorzugsweise kleiner oder gleich 30 % der Profiltiefe (Hs) ist und stärker bevorzugt zwischen 10 % und 30 % der Profiltiefe (Hs) beträgt.

## Claims

1. Tyre (10) for passenger vehicle having an outside diameter OD and comprising a tread (14) intended to come into contact with the ground, when the tyre (10) is running, via a tread surface (38) axially delimited by first and second axial edges (41, 42) of the tread surface (38), the tread (14) comprising:
- an axially central portion (P0) comprising main circumferential grooves (52, 54, 56, 58) having a depth (Hr) greater than or equal to 50% of the tread pattern height (Hs) comprising at least first and second main circumferential grooves (52, 54) which are arranged axially one on each side of the median plane (M) of the tyre (10), the first and second main circumferential grooves (52, 54) being the main circumferential grooves axially furthest towards the outside of the tread (14), the axially central portion (P0) extending axially from an axially outside edge (521) of the first main circumferential groove (52) as far as an axially outside edge (541) of the second main circumferential groove (54), the axially central portion (P0) comprising at least one central rib (62, 64, 66), the or each central rib (62, 64, 66) being axially delimited by two main circumferential grooves (52, 54, 56, 58) having a depth (Hr) greater than or equal to 50% of the tread pattern height (Hs),
- first and second axially lateral portions (P1, P2) arranged axially on the outside of the axially central portion (P0) axially one on each side of the axially central portion (P0) with respect to the median plane (M) of the tyre (10) and arranged in such a way that:
- the first axially lateral portion (P1) extends axially from the first axial edge (41) of the tread surface (38) as far as the axially outside edge (521) of the first main circumferential groove (52),
- the second axially lateral portion (P2) extends axially from the second axial edge (42) of the tread surface (38) as far as the axially outside edge (541) of the second main circumferential groove (54),
**characterized in that** the or each central rib (62, 64, 66) and each first and second axially lateral portion (P1, P2) comprises at least one axial portion (P62, P64, P66, P11, P21, P641, P642, P643, P644, P622, P662) that satisfies just one of the following conditions I, II, III, the axial width of the whole of the axial portion or portions of the or each central rib (62, 64, 66) and of each first and second axially lateral portion (P1, P2) each satisfying just one of conditions I, II, III being greater than or equal to 70% of the axial width (Ln2, Ln4, Ln6, L1, L2) of the or each central rib (62, 64, 66) and of each first and second axially lateral portion (P1, P2):
I - the axial portion (P62, P64, P66, P642, P643, P622, P662) comprises no transverse cut (90, 90') having a depth (Ht) greater than or equal to 20% of the tread pattern height (Hs) and an axial length (La, Lb, Lc) greater than or equal to 20% of the axial width (Ln2, Ln4, Ln6, L1, L2) of the central rib (62, 64, 66) or of the axially lateral portion (P1, P2), the axial portion possibly comprising at least one circumferential cut (72, 74, 76, 82, 84) having a depth (Hc2, Hc4, Hc6, HI2, HI4) strictly less than 50% of the tread pattern height (Hs),
II - the axial portion (P644) comprises transverse cuts (90, 90') having a depth (Ht) greater than or equal to 20% of the tread pattern height (Hs) and an axial length (La, Lb, Lc) greater than or equal to 20% of the axial width of the central rib (62, 64, 66) or of the axially lateral portion (P1, P2), the collection of the N transverse cuts (90, 90') of the axial portion having a depth (Ht) greater than or equal to 20% of the tread pattern height (Hs) and an axial length (La, Lb, Lc) greater than or equal to 20% of the axial width (Ln2, Ln4, Ln6, L1, L2) of the central rib (62, 64, 66) or of the axially lateral portion (P1, P2) being arranged in such a way that π x OD / N ≥ 40 mm, the axial portion possibly comprising at least one circumferential cut (72, 74, 76, 82, 84) having a depth (Hc2, Hc4, Hc6, HI2, HI4) strictly less than 50% of the tread pattern height (Hs),
III - the axial portion (P11, P21, P621, P641, P661, P643) comprises transverse cuts (90, 90') having a depth (Ht) greater than or equal to 20% of the tread pattern height (Hs) and an axial length (La, Lb, Lc) greater than or equal to 20% of the axial width (Ln2, Ln4, Ln6, L1, L2) of the central rib (62, 64, 66) or of the axially lateral portion (P1, P2), the whole of the N transverse cuts (90, 90') of the central rib (62, 64, 66) or of the axial portion having a depth (Ht) greater than or equal to 20% of the tread pattern height (Hs) and an axial length (La, Lb, Lc) greater than or equal to 20% of the axial width (Ln2, Ln4, Ln6, L1, L2) of the central rib (62, 64, 66) or of the axially lateral portion (P1, P2) being arranged in such a way that π x OD / N ≤ 24 mm, the axial portion possibly comprising at least one circumferential cut (72, 74, 76, 82, 84) having a depth (Hc2, Hc4, Hc6, HI2, HI4) strictly less than 50% of the tread pattern height (Hs),
condition I or II being satisfied at least by one of the axial portions of the or of one of the central ribs (62, 64, 66) or by one of the axial portions of the first axially lateral portion (P1) or by one of the axial portions of the second axially lateral portion (P2),
condition III being satisfied at least by one of the axial portions of the or of one of the central ribs (62, 64, 66) or by one of the axial portions of the first axially lateral portion (P1) or by one of the axial portions of the second axially lateral portion (P2).

2. Tyre (10) according to the preceding claim, wherein at least one of the axial portions of the or each central rib (62, 64, 66) satisfies condition I or II, and at least one of the axial portions of each first and second axially lateral portion (P0, P1) satisfies condition III, preferably at least one of the axial portions of the or each central rib (62, 64, 66) satisfies condition I and at least one of the axial portions of each first and second axially lateral portion (P1, P2) satisfies condition III.

3. Tyre (10) according to either one of the preceding claims, wherein the whole of the N transverse cuts (90, 90') of the or each central rib (62, 64, 66) or of the or each axially lateral portion (P0, P1) having a depth greater than or equal to 20% of the tread pattern height (Hs) and an axial length (La, Lb, Lc) greater than or equal to 20% of the axial width (L1, L2, Ln1, Ln4, Ln6) of the or of each central rib (62, 64, 66) or of the or each axially lateral portion (P1, P2), and satisfying condition III is arranged in such a way that π x OD / N ≥ 10 mm, and preferably π x OD / N ≥ 15 mm.

4. Tyre (10) according to any one of the preceding claims, wherein the axial width of the whole of the axial portion or portions of the or each central rib (62, 64, 66) and of each first and second axially lateral portion (P1, P2) each satisfying just one of conditions I, II, III is greater than or equal to 80%, preferably 90%, of the axial width (Ln2, Ln4, Ln6, L1, L2) of the or each central rib (62, 64, 66) and of each first and second axially lateral portion (P1, P2).

5. Tyre (10) according to any one of the preceding claims, wherein, with the or each central rib (62, 64, 66) or the first axially lateral portion (P1) or the second axially lateral portion (P2) comprising several axial portions each satisfying just one of conditions I, II, III, the whole of the axial portions of the or each central rib (62, 64, 66) or of the first axially lateral portion (P1) or of the second axially lateral portion (P2) satisfies just one of conditions I, II, III.

6. Tyre (10) according to any one of the preceding claims, wherein the or each central rib (62, 64, 66) and each first and second axially lateral portion (P1, P2) comprises an axial portion satisfying just one of conditions I, II, III and having an axial width greater than or equal to 70%, preferably 80%, and more preferably 90%, of the axial width of the or each central rib (62, 64, 66) and of each first and second axially lateral portion (P1, P2).

7. Tyre (10) according to any one of the preceding claims, wherein the ratio of the axial width (L0) of the central portion (P0) to the axial width (L1, L2) of each first and second axially lateral portion (P1, P2) is greater than or equal to 3.0, preferably ranges from 3.0 to 5.0 and more preferably ranges from 4.0 to 4.5.

8. Tyre (10) according to any one of the preceding claims, wherein, with each first and second axially lateral portion (P1, P2) comprising transverse cuts (90, 90') extending axially from an axially outside end (E1) as far as an axially inside end (E2), at least 50%, preferably at least 75%, more preferably still, each of the transverse cuts (90, 90') of each first and second axially lateral portion (P1, P2) is at least partially blocked off by a connecting bridge (100) connecting the leading face (Ft1) and trailing face (Ft2) forming the axially inside end (E2) of the transverse cut (90, 90').

9. Tyre (10) according to any one of the preceding claims, wherein the surface-area void ratio of each first and second axially lateral portion (P1, P2) ranges from 20% to 30%.

10. Tyre (10) according to any one of the preceding claims, wherein the volume void ratio of each first and second axially lateral portion (P1, P2) ranges from 5% to 10%.

11. Tyre (10) according to any one of the preceding claims, wherein the surface-area void ratio of the or each central rib (62, 64, 66) ranges from 5% to 10%.

12. Tyre (10) according to any one of the preceding claims, wherein the volume void ratio of the or each central rib (62, 64, 66) ranges from 0.5% to 5%, preferably ranges from 0.5% to 2%.

13. Tyre (10) according to any one of the preceding claims, wherein the axially central portion (P0) comprises at least a third main circumferential groove (56) and at least first and second central ribs (62, 64, 66) arranged in such a way that:
- the first central rib (62) is comprised axially between the first main circumferential groove (52) and the third main circumferential groove (56),
- the second central rib (64) is comprised axially between the second main circumferential groove (54) and the third main circumferential groove (56).

14. Tyre (10) according to any one of the preceding claims, wherein the axially central portion (P0) comprises third and fourth main circumferential grooves (56, 58) and at least first, second and third central ribs (62, 64, 66) arranged in such a way that:
- the first central rib (62) is comprised axially between the first main circumferential groove (52) and the third main circumferential groove (56),
- the second central rib (64) is comprised axially between the third main circumferential groove (56) and the fourth main circumferential groove (58), and
- the third central rib (66) is comprised axially between the fourth main circumferential groove (58) and the second main circumferential groove (54).

15. Tyre (10) according to any one of the preceding claims, wherein the or at least one of the central ribs (62, 64, 66), preferably each central rib (62, 64, 66) comprises at least one additional circumferential cut (72, 74, 76), the or each additional circumferential cut (72, 74, 76):
- being arranged axially between the two circumferential grooves (52, 54, 56, 58) between which the or each central rib (62, 64, 66) is comprised, and
- having a depth (Hc) strictly less than 50% of the tread pattern height (Hs), preferably less than or equal to 30% of the tread pattern height (Hs) and more preferably ranging from 10% to 30% of the tread pattern height (Hs).
